# EUROPÄISCHE PATENTANMELDUNG

(11) **EP 4 671 699 A1**
(43) Veröffentlichungstag der Anmeldung: **31.12.2025**
(21) Anmeldenummer: 25176900.6
(22) Anmeldetag: 16.05.2025
(51) Int. Cl.: G01F 1/60, G01F 1/002

(54) **VERFAHREN ZUM BETREIBEN EINES MAGNETISCH-INDUKTIVEN DURCHFLUSSMESSGERÄTS UND MAGNETISCH-INDUKTIVES DURCHFLUSSMESSGERÄT**

(30) Priorität: 28.06.2024 DE 102024118332
(71) Anmelder: Krohne AG, 4019 Basel (CH)
(72) Erfinder: Guus, Reijnders, 4754 AK Stampersgat (NL); Stevenhagen, Robin, 3145 AL Maassluis (NL)
(74) Vertreter: Gesthuysen Patentanwälte

(57) **Zusammenfassung**

Dargestellt und beschrieben sind ein Verfahren (1) zum Betreiben eines magnetisch-induktiven Durchflussmessgeräts (2), wobei das magnetisch-induktive Durchflussmessgerät (2) wenigstens ein Messrohr (3) mit einem Einströmbereich (3a), einem Ausströmbereich (3b) und mit einem zwischen dem Einströmbereich (3a) und dem Ausströmbereich (3b) liegenden Messbereich (3c) zum Führen eines strömenden Mediums (4) durch das Durchflussmessgerät (2), wenigstens eine Magnetfelderzeugungseinrichtung (5) zum Erzeugen eines das Messrohr (3) im Messbereich (3c) senkrecht zur Strömungsrichtung des Mediums (4) durchsetzenden Magnetfeldes (B), wenigstens ein Messelektrodenpaar (6a, 6b) im Messbereich (3c) des Messrohrs (3) zum Abgreifen einer in dem Medium (4) im Messrohr (3) induzierten elektrischen Spannung (Uind), und wenigstens eine Steuer- und Auswerteeinheit (7) umfasst, die in einem Durchflussmessbetrieb aus der gemessenen induzierten elektrischen Spannung (Uind) einen Durchflussmesswert (F) ermittelt.

In einem Füllstandmessbetrieb wird ein Messstrom (Im) über Stromkreiselektroden (8a, 8b) in das Medium (4) in dem Messrohr (3) eingespeist, und eine trockenliegende Stromkreiselektrode (8a, 8b) und/oder eine trockenliegende Messelektrode (6a, 6b) wird erkannt wird durch messtechnisches Erfassen und Auswerten wenigstens einer der folgenden Größen: wenigstens eine der erfassten Messelektrodenspannungen (Ue1, Ue2), der von der Stromquelle (9) abgegebene Messstrom (Im), eine von der Stromquelle (9) verursachte Einspeisespannung (Uin) an der ersten Stromkreiselektrode (8a).

## Beschreibung

Die Erfindung betrifft ein Verfahren zum Betreiben eines magnetisch-induktiven Durchflussmessgeräts, wobei das magnetisch-induktive Durchflussmessgerät wenigstens ein Messrohr mit einem Einströmbereich, einem Ausströmbereich und mit einem zwischen dem Einströmbereich und dem Ausströmbereich liegenden Messbereich zum Führen eines strömenden Mediums durch das Durchflussmessgerät, wenigstens eine Magnetfelderzeugungseinrichtung zum Erzeugen eines das Messrohr im Messbereich senkrecht zur Strömungsrichtung des Mediums durchsetzenden Magnetfeldes, wenigstens ein Messelektrodenpaar im Messbereich des Messrohrs zum Abgreifen einer in dem Medium im Messrohr induzierten elektrischen Spannung, und wenigstens eine Steuer- und Auswerteeinheit umfasst, die in einem Durchflussmessbetrieb aus der gemessenen induzierten elektrischen Spannung einen Durchflussmesswert ermittelt. Darüber hinaus betrifft die Erfindung auch ein solches magnetisch-induktives Durchflussmessgerät.

Die zuvor genannten Durchflussmessgeräte, die auf dem magnetisch-induktiven Messprinzip beruhen, sind seit Jahrzehnten bekannt. Folglich sind auch Verfahren zum Betreiben solcher Durchflussmessgeräte, wie sie zuvor beschrieben worden sind, seit Langem bekannt. Das magnetisch-induktive Messprinzip beruht auf der Kraftwirkung auf Ladungsträger, die sich senkrecht zu einem Magnetfeld bewegen bzw. die eine Bewegungskomponente senkrecht zu dem betreffenden Magnetfeld haben (Lorentzkraft). Um im "Normalbetrieb" des Durchflussmessgeräts, also im Durchflussmessbetrieb, eine Durchflussmessung auf diesem Prinzip beruhend durchführen zu können, muss das in dem Messrohr geführte Medium eine elektrische Mindestleitfähigkeit aufweisen. Je schneller sich das Medium durch das Messrohr und damit auch durch das von der Magnetfelderzeugungseinrichtung erzeugte Magnetfeld bewegt, desto stärker erfolgt eine Trennung von Ladungsträgern in dem strömenden Medium des entsprechenden Messrohrabschnitts, und umso stärker wird ein durch die Ladungstrennung bewirktes elektrisches Feld, das sich zwischen den Elektroden des Messrohrs ausbildet und als induzierte elektrische Spannung zwischen den Messelektroden abgenommen werden kann. Die induzierte Spannung zwischen den Messelektroden entwickelt sich proportional zur Strömungsgeschwindigkeit, jedenfalls in dem Zeitraum, in dem das Magnetfeld konstant ist.

Das Prinzip der magnetisch-induktiven Durchflussmessung hat sich als ein zuverlässiges Messprinzip bewährt, jedoch ist bekannt, dass magnetisch-induktive Durchflussmessgeräte empfindlich auf das Strömungsprofil des durch das Messrohr fließenden Mediums bzw. auf eine Veränderung des Strömungsprofils reagieren. Ein teilgefülltes Messrohr ist die massivste Form einer solchen Störung des Strömungsprofils. Magnetisch-induktive Durchflussmessgeräte werden kalibriert mit vollständig gefülltem und daher auch über den gesamten Querschnitt durchströmten Messrohr, entsprechend liefern magnetisch-induktive Durchflussmessgeräte auch nur richtige Messwerte, wenn die Voraussetzung eines vollständig gefüllten und vollständig durchströmten Messrohrs erfüllt ist. Infolgedessen ist beim Betrieb eines magnetisch-induktiven Durchflussmessgeräts von Interesse, ein nur teilgefülltes (oder auch vollständig leeres) Messrohr zu erkennen, da die Messwerte in dieser Situation nicht mehr zuverlässig sind und darüber hinaus möglicherweise eine Störung im Prozess vorliegt. Aus dem Stand der Technik sind verschiedene Verfahren bekannt, Teilfüllungen von Messrohren zu erkennen.

Aufgabe der vorliegenden Erfindung ist es, ein verbessertes Verfahren zur Bestimmung des Füllstandes eines Mediums mit einem magnetisch-induktiven Durchflussmessgerät anzugeben.

Die Aufgabe ist bei dem eingangs beschriebenen Verfahren und dem diesbezüglich ausgebildeten magnetisch-induktiven Durchflussmessgerät zunächst dadurch gelöst, dass im Bereich des Messrohrs mit Kontakt zum Medium zumindest bei vollständig mediumgefüllten Messrohr eine erste Stromkreiselektrode und eine zweite Stromkreiselektrode angeordnet sind, dass die Stromkreiselektroden außerhalb des Messrohres mit einer Stromquelle verbunden sind und in einem Füllstandmessbetrieb der Stromquelle ein Soll-Messstrom vorgegeben wird, mit dem die Stromkreiselektroden beaufschlagt werden. Die Stromkreiselektroden sind so angeordnet, dass sich ein Füllstandstromkreis zumindest bei vollständig mediumgefülltem Messrohr im Medium über einen Mediumstrompfad schließt, wobei der Mediumstrompfad den Strömungsquerschnitt des Messrohrs, in dem die Messelektroden liegen, passiert, sodass sich ein elektrischer Spannungsabfall zwischen den Stromkreiselektroden im Medium ergibt.

Im Füllstandmessbetrieb wird eine trockenliegende Stromkreiselektrode und/oder eine trockenliegende Messelektrode erkannt durch messtechnisches Erfassen und Auswerten wenigstens einer der folgenden Größen: wenigstens eine der erfassten Messelektrodenspannungen, der von der Stromquelle abgegebene Messstrom, eine von der Stromquelle verursachte Einspeisespannung an der ersten Stromkreiselektrode. Mit einer trockenliegenden Elektrode ist gemeint, dass die Elektrode keinen oder nur einen stark eingeschränkten elektrischen Kontakt zu dem Mediumvolumen in dem Messrohr hat, also im Vergleich zu dem Zustand, wenn das Messrohr beispielsweise vollständig gefüllt ist und das Mediumvolumen die Elektrode umgibt und nicht etwa nur dünnschichtig benetzt durch Restanhaftungen bei abgefallenem Füllstand.

Bei einer erkannten trockenliegenden Stromkreiselektrode und/oder einer erkannten trockenliegenden Messelektrode wird der Status "trockenliegende Elektrode" zumindest mittelbar signalisiert. "Signalisieren" bedeutet, dass der Status technisch erkennbar wird, beispielsweise indem in dem magnetisch-induktiven Durchflussmessgerät ein entsprechendes Flag gesetzt wird, indem auf einer Anzeige des magnetisch-induktiven Durchflussmessgeräts eine entsprechende Meldung angezeigt wird, oder indem eine Nachricht über eine externe Schnittstelle nach außerhalb des magnetisch-induktiven Durchflussmessgeräts übertragen wird (Feldbusschnittstelle, Stromschnittstelle mit überlagertem HART-Protokoll, Ethernet, Bluetooth usw.). Die mittelbare Signalisierung bedeutet, dass nicht explizit die Nachricht "trockenliegende Elektrode" signalisiert werden muss, es können vielmehr sinngemäße Nachrichten signalisiert werden, beispielsweise betreffend den Füllstand, eine Teilfüllung anzeigend usw.

Der Erfindung liegt die Idee zugrunde, das Medium im Messrohr als Teil des Füllstandstromkreises einzubinden, sodass eine Änderung des Mediumfüllstandes Einfluss hat auf die elektrischen Eigenschaften des Füllstandstromkreises selbst (elektrischer Widerstand des Füllstandstromkreises) und auch auf dessen unmittelbare Umgebung (Änderung des Spannungsabfalls im Medium entlang des Mediumstrompfades). Durch Beobachtung des elektrischen Verhaltens des Füllstandstromkreises kann auf einfache Weise darauf geschlossen werden, ob Stromkreiselektroden und/oder Messelektroden trockenliegen und damit kann auch auf den Füllstand des Mediums in dem Messrohr geschlossen werden. Besonders leicht beobachtbar sind die Messelektrodenspannungen, die ohnehin erfasst werden für den Durchflussmessbetrieb, das gilt auch für den von der Stromquelle abgegebenen Messstrom, der von der Stromquelle als Regelgröße meist ohnehin erfasst wird, und auch für die von der Stromquelle verursachte Einspeisespannung an der ersten Stromkreiselektrode, da dies die Stellgröße der Stromquelle ist, um den vorgegebenen Soll-Messstrom einzustellen.

Bei dem erfindungsgemäßen Verfahren hat es sich als vorteilhaft herausgestellt, dass die Messelektroden, die im Durchflussmessbetrieb zur Erfassung der im Medium induzierten elektrischen Spannung dienen, im Füllstandmessbetrieb nicht dazu verwendet werden, ein für die Füllstandsmessung geeignetes Messsignal in das Medium einzuspeisen, dazu sind die von den Messelektroden verschiedenen Stromkreiselektroden vorgesehen. Ein Grund liegt darin, dass ein Stromfluss über die Messelektroden unerwünschte elektrische und elektrochemische Effekte an den Messelektroden zur Folge haben kann, die sich nachteilig auf die Durchflussmessung auswirken können. Ein weiterer Vorteil der erfindungsgemäßen Lösung liegt in der Vermeidung einer aufwendigen schaltungstechnischen Lösung, um eine empfindliche Spannungsmessung auf der einen Seite und die Einbringung eines robusten Messsignals auf der anderen Seite über die Messelektroden miteinander zu vereinbaren. Bei dem erfindungsgemäßen Verfahren geht es grundsätzlich nicht um den Primärmessbetrieb des magnetisch-induktiven Durchflussmessgeräts, also den Durchflussmessbetrieb, sondern um den sekundären Messbetrieb, also den Füllstandmessbetrieb, auch wenn dies nicht jedes Mal hervorgehoben wird.

Die erfindungsgemäße Lösung, bei der im Füllstandmessbetrieb das Medium über - von den Messelektroden verschiedene - Stromkreiselektroden mit einem Messstrom beaufschlagt wird, vermeidet die aufgezeigten Problempunkte und ermöglicht zudem, dass mit den Messelektroden, die prinzipbedingt mit der Möglichkeit der hochempfindlichen Spannungsmessung im Zusammenhang stehen, auch eine für die Füllstandmessung relevante Messgrö-ße präzise erfasst werden kann, nämlich eine Messelektrodenspannung, verursacht durch den eingeprägten Messstrom im Medium.

Nach der hier getroffenen Definition verläuft das Messrohr über die gesamte Erstreckung des Durchflussmessgeräts, vom Einströmbereich zum Ausströmbereich einschließlich eventuell vorhandener Anschlüsse zur Montage des Durchflussmessgeräts insoweit diese auch mediumführend sind. Das magnetisch-induktive Durchflussmessgerät wird gemäß einer Standardmontage üblicherweise so verbaut, dass die Messelektroden auf einer waagerechten Verbindungslinie liegen und die Magnetfelderzeugungseinrichtung dazu senkrecht ein vertikales Magnetfeld erzeugt, also in Richtung des Erdschwerefeldes. Im normalen Messbetrieb ist das Durchflussmessgerät von dem Medium vollständig ausgefüllt und durchströmt. Auf dieser Annahme beruht auch die Ermittlung des Durchflussmesswertes.

Von der konkreten Anordnung der Stromkreiselektroden und der Messelektroden im Bereich des Messrohrs hängt es ab, wie tief der Füllstand des Mediums in dem Messrohr abfallen kann, bevor eine Stromkreiselektrode oder eine Messelektrode trockenliegt und eine trockenliegende Stromkreiselektrode bzw. trockenliegende Messelektrode detektiert wird bzw. ein Füllstand unterhalb der Montagehöhe der höchsten Stromkreiselektrode bzw. der höchsten Messelektrode.

Bei der Anordnung der Stromkreiselektroden ist darauf zu achten, dass sie jedenfalls im vollständig gefüllten Zustand des Messrohrs Kontakt zum Medium haben, damit der über die Stromkreiselektroden in das Medium eingespeiste Messstrom über seinen Mediumstrompfad einen geschlossenen Stromkreis bilden kann. Die Stromkreiselektroden müssen im Bereich des Messrohrs so angeordnet sein, dass der Messstrompfad den Bereich der Messelektroden passiert, damit der Messstrom einen messtechnisch detektierbaren Einfluss auf die Messelektroden hat und so überhaupt mittels der über die Messelektroden erfassten Messelektrodenspannungen ein über das Medium geschlossener Füllstandstromkreis erkannt werden kann.

Durch Erfassen und Auswertung einer oder mehrerer der Größen a) erfasste Messelektrodenspannung(en), b) von der Stromquelle abgegebener Messstrom, c) von der Stromquelle verursachte Einspeisespannung an der ersten Stromkreiselektrode, lässt sich eindeutig bestimmen, welche der Stromkreiselektroden und/oder der Messelektroden trockenliegt. Insoweit zeichnet sich eine vorteilhafte Weiterbildung des Verfahrens dadurch aus, dass bei erkanntem Status "trockenliegende Elektrode" zusätzlich signalisiert wird, welche der Stromkreiselektroden und/oder der Messelektroden trockenliegt, insbesondere wobei zusätzlich eine Füllstandangabe des Mediums in dem Messrohr angegeben wird. Da keine kontinuierliche Füllstandmessung durchgeführt wird, sondern nur punktuell trockenliegende Elektroden detektiert werden können, ist eine Füllstandangabe immer zu verstehen als maximaler Füllstand, bzw. als ein Füllstand zwischen der höchsten nicht trockenliegenden Elektrode und der niedrigsten trockenliegenden Elektrode.

Vorzugsweise wird die erste Stromkreiselektrode von der Stromquelle auf ein Einspeisepotenzial und die zweite Stromkreiselektrode von der Stromquelle auf ein Referenzpotenzial gelegt, insbesondere wobei das Referenzpotenzial das elektrische Bezugspotenzial ist, auf das bezogen auch die Messelektrodenspannungen gemessen werden. Vorteilhaft handelt es sich bei dem Referenzpotenzial um die elektrische Masse der Messschaltung des Durchflussmessgeräts.

Bei einer Ausgestaltung des Verfahrens erzeugt die Stromquelle einen Wechselstrom mit konstanter Amplitude als Messstrom. Wenn im Füllstandmessbetrieb die Messelektrodenspannungen ausgewertet werden, dann ist die interessierende Größe der Messelektrodenspannung insbesondere die Amplitude der Messelektrodenspannung. Der Einsatz eines Wechselstroms hat den Vorteil, dass mit einem Gleichstrom bzw. einer Gleichspannung möglicherweise verbundene elektrochemische Effekte an den Elektroden, hier also den Stromkreiselektroden, vermieden werden. Die Messelektronik, die die Messelektrodenspannung auswertet, ist ohnehin auch dazu eingerichtet, Wechselspannungen zu erfassen, da auch die Polarität der in dem Medium induzierten elektrischen Spannung ihr Vorzeichen wechselt aufgrund des üblicherweise in seiner Polarität wechselnden Magnetfeldes der Magnetfelderzeugungseinrichtung. Eine alternative Variante des Verfahrens besteht darin, dass die Stromquelle einen Gleichstrom mit konstanter Höhe erzeugt, was besonders einfach zu realisieren ist.

Bei einer bevorzugten Ausgestaltung des Verfahrens wird im Füllstandmessbetrieb zum Test einer trockenliegenden Stromkreiselektrode der von der Stromquelle abgegebene Messstrom messtechnisch erfasst und bei einer Unterschreitung des gemessenen Messstroms von dem der Stromquelle vorgegebenen Soll-Messstrom wird wenigstens eine trockenliegende Stromkreiselektrode erkannt. Wenn eine Stromkreiselektrode trockenliegt, ist der Füllstandstromkreis unterbrochen und es kann kein Messstrom fließen. Es sind Situationen denkbar, bei denen der Füllstandstromkreis bei einer trockenliegenden Stromkreiselektrode trotzdem einen gewissen Messstrom leitet, beispielsweise bei einem schäumenden Medium oder bei einer von einem Mediumrückstand noch benetzten Stromkreiselektrode. In diesen Fällen liegt eine zwar nicht mehr vollständig umspülte Stromkreiselektrode, sondern nur eine umschäumte oder benetzte Stromkreiselektrode vor, über die aber ein gewisser Strom in das Medium geleitet wird, wenn auch nicht der beabsichtigte Soll-Messstrom. Insbesondere wird eine trockenliegende Stromkreiselektrode erkannt, wenn die Abweichung größer ist als eine zulässige maximale Abweichung, weiter bevorzugt, wenn der gemessene Messstrom kleiner als ein vorgegebener minimaler Messstrom ist, ganz insbesondere wenn der gemessene Messstrom null ist (idealer Fall des Trockenliegens). Eine einfache technische Umsetzung der messtechnischen Erfassung des von der Stromquelle abgegebene Messstroms besteht in der Verwendung eines Strommesswiderstandes, der seriell in den Füllstandstromkreis geschaltet ist. Die Strommessung erfolgt dann durch die Messung des Spannungsabfalls über dem Strommesswiderstand.

Alternativ oder zusätzlich kann ein Test auf eine trockenliegende Stromkreiselektrode im Füllstandmessbetrieb dadurch durchgeführt werden, dass die Spannungsdifferenz zwischen der messtechnisch erfassten Einspeisespannung an der ersten Stromkreiselektrode und einer von der Stromquelle eingestellten Stromquellen-Ausgangsspannung ermittelt wird, und eine trockenliegende Stromkreiselektrode festgestellt wird, wenn der Betrag der ermittelten Spannungsdifferenz kleiner ist als eine vorgegebene maximale Spannungsdifferenz. Dem Test liegt die Überlegung zugrunde, dass ein von der Stromquelle ordnungsgemäß eingestellter Messstrom zu einem Spannungsabfall führen wird über den immer vorhandenen Widerstand zwischen der Stromquelle und der ersten Stromkreiselektrode, der beispielsweise gebildet sein kann durch einen separat vorgesehenen Strommesswiderstand, einen internen Strommesswiderstand in der Stromquelle und den Leitungswiderstand. Dieser Spannungsabfall wird detektiert und als Hinweis auf einen geschlossenen Füllstandstromkreis gewertet, bei dem keine Stromkreiselektrode trockenliegt. Bei einer trockenliegenden Stromkreiselektrode ist der Messstrom praktisch nicht vorhanden und liegt üblicherweise bei null, sodass in diesem Fall kein Spannungsabfall festzustellen ist.

Eine weitere Ausgestaltung des Verfahrens ist dadurch gekennzeichnet, dass im Füllstandmessbetrieb zum Test einer trockenliegenden Messelektrode das Spannungsverhältnis der erfassten Messelektrodenspannung der jeweiligen Messelektrode zu der messtechnisch erfassten Einspeisespannung an der ersten Stromkreiselektrode ermittelt wird und eine trockenliegende Messelektrode erkannt wird, wenn das ermittelte Spannungsverhältnis der betreffenden Messelektrode einen vorgegebenen Spannungsverhältniswert unterschreitet. Dieser Test basiert auf der Erkenntnis, dass bei intaktem Füllstandstromkreis über den Mediumstrompfad der resultierende elektrische Spannungsabfall im Medium zu einer von null verschiedenen Messelektrodenspannung an einer nicht trockenliegenden Messelektrode führt. Der Test setzt voraus, dass der Füllstandstromkreis intakt, also über das Medium geschlossen ist. Deshalb ist bei einer bevorzugten Ausgestaltung dieses Verfahrens vorgesehen, dass erst dann auf eine trockenliegenden Messelektrode geschlossen wird, wenn zusätzlich ein Test auf eine trockenliegende Stromkreiselektrode negativ ausgefallen ist (wenn nur ein solcher Test durchgeführt worden ist). Wenn mehrere Tests auf eine trockenliegende Stromkreiselektrode durchgeführt worden sind, sollten alle dieser Tests negativ ausgefallen sein.

Bei einer bevorzugten Ausgestaltung des Verfahrens wird der Stromquelle ein Soll-Messstrom mit einem charakteristischen Zeitverlauf vorgegeben, insbesondere in Form einer Rechteckfolge oder einer Sägezahnkurve, wobei bei Auswertung einer der messtechnisch erfassten Größen, also einer der erfassten Messelektrodenspannungen und/oder des von der Stromquelle abgegebenen Messstroms und/oder der von der Stromquelle verursachten Einspeisespannung an der ersten Stromkreiselektrode, überprüft wird, ob die messtechnisch erfasste Größe einen entsprechenden charakteristischen Zeitverlauf aufweist. Wenn die messtechnisch erfasste Größe einen entsprechenden charakteristischen Zeitverlauf aufweist, wird die messtechnisch erfasste Größe als sicher vorhanden eingestuft, andernfalls wird sie als nicht sicher vorhanden eingestuft. Dies gilt speziell dann, wenn die messtechnisch erfasste Größe zwar einen von null verschiedenen Signalpegel hat, aber nicht den erwarteten charakteristischen Zeitverlauf hat. Insbesondere wird in diesem Fall eine unzuverlässige Erfassung der betreffenden Größe signalisiert.

Vorzugsweise wird während des Füllstandmessbetriebs der Durchflussmessbetrieb ausgesetzt, insbesondere wird die Magnetfelderzeugungseinrichtung nicht bestromt, sodass während der Füllstandmessung kein Magnetfeld erzeugt und damit in dem strömenden Medium auch keine Spannung induziert wird. Damit werden gegenseitige Beeinflussungen der verschiedenen Betriebsarten sicher vermieden.

Bei einer alternativen Ausgestaltung des Verfahrens wird der Füllstandmessbetrieb zeitgleich zum Durchflussmessbetrieb durchgeführt, also auch während die Magnetfelderzeugungseinrichtung bestromt wird. Üblicherweise wird die Magnetfelderzeugungseinrichtung mit einer bestimmten Frequenz in unterschiedlicher Richtung bestromt, sodass ein Magnetfeld resultiert, dessen Polarität sich mit der Umschaltfrequenz der Magnetfelderzeugungseinrichtung ändert. Die Magnetfeldstärke kann sich nicht abrupt ändern, da sich der Strom durch die Magnetfelderzeugungseinrichtung, die naturgemäß eine gewisse Induktivität aufweist, auch nur stetig ändern kann. Beim Umschalten der Bestromungsrichtung baut sich das Magnetfeld in der einen Richtung ab, wird zu Null und baut sich in der anderen Richtung wieder auf, bis es nach dieser transienten Phase stationär wird. Während das Magnetfeld stationär ist, wird von den Messelektroden eine Mehrzahl von Werten für die in dem Medium induzierte elektrischen Spannung erfasst, aus denen der interessierende Durchflussmesswert errechnet wird (Durchflussmessbetrieb). Es hat sich als vorteilhaft herausgestellt, wenn die Füllstandmessung entweder direkt zu Beginn der Umschaltung der Bestromungsrichtung, also zu Beginn der transienten Phase der Magnetfeldumschaltung durchgeführt wird, in der also ohnehin keine Messwerte für den Durchfluss erfasst werden, oder aber ganz am Ende der stationären Phase des Magnetfeldes (und damit kurz vor der Umschaltung der Bestromungsrichtung), sodass nur wenige Messwerte betroffen sind, die für die Durchflussbestimmung relevant sind.

Bei einer weiteren bevorzugten Ausgestaltung des Verfahrens ist vorgesehen, dass in dem magnetisch-induktiven Durchflussmessgerät eine Information zumindest über die höchstliegende Elektrode der Messelektroden und Stromkreiselektroden hinterlegt ist und bevorzugt diese Elektrode durch einen entsprechenden Test auf eine trockenliegende Messelektrode oder einen entsprechenden Test auf eine trockenliegende Stromkreiselektrode überprüft wird, in Abhängigkeit davon, ob es sich um eine Stromkreiselektrode oder um eine Messelektrode handelt. Höchstliegend bedeutet am höchsten im üblichen Verständnis, also entgegen der Richtung des Erdschwerefeldes gemessen.

Bei einer weiteren bevorzugten Ausgestaltung des Verfahrens ist vorgesehen, dass in dem magnetisch-induktiven Durchflussmessgerät eine Information zumindest über die höchstliegende Elektrode der Messelektroden und Stromkreiselektroden hinterlegt ist und mit der Information über die höchstliegende Elektrode das Ergebnis eines durchgeführten Tests auf eine trockenliegende Messelektrode und/oder eine trockenliegende Stromkreiselektrode einem Plausibilitätstest unterzogen wird. Der Plausibilitätstest berücksichtigt, dass die höchstliegende Elektrode als erste Elektrode trockenliegt bzw. die höchstliegende Elektrode sich jedenfalls unter der Menge der festgestellten trockenliegenden Elektroden befinden muss. Es wird also insbesondere überprüft, ob die höchstliegende Elektrode als erste Elektrode als trockenliegende Elektrode erkannt worden ist, oder es wird insbesondere überprüft, ob bei mehreren als trockenliegend erkannten Elektroden jedenfalls auch die höchstliegende Elektrode als trockenliegend erkannt worden ist. Wird der Plausibilitätstest nicht bestanden, wird eine entsprechende Fehlermeldung signalisiert.

Eine Weiterentwicklung des Verfahrens zeichnet sich dadurch aus, dass in dem magnetisch-induktiven Durchflussmessgerät Informationen über die Einbauhöhe mehrerer der Messelektroden und Stromkreiselektroden hinterlegt sind und bei Erkennung mehrerer trockenliegender Elektroden überprüft wird, ob es sich dabei um die mehreren höchstliegenden Elektroden handelt.

Bei einer weiterentwickelten bevorzugten Ausgestaltung des Verfahrens ermittelt das magnetisch-induktive Durchflussmessgerät die höchstliegende Elektrode oder mehrere höchstliegende Elektroden selbstständig auf Grundlage der Einbaupositionen der Messelektroden und der Stromkreiselektroden im magnetisch-induktiven Durchflussmessgerät bei einer Standardmontage und auf Grundlage von Informationen über eine von der Standardmontage abweichende Istmontage, in der das magnetisch-induktive Durchflussmessgerät tatsächlich verbaut ist.

Die Standardmontage bezieht sich auf die übliche und vom Hersteller empfohlene Einbauposition des magnetisch-induktiven Durchflussmessgeräts in den Prozess, also in ein prozesstechnisches Rohrsystem. Häufig anzutreffen ist eine empfohlene Standardausrichtung, bei der die beiden Messelektroden auf einer waagerechten Verbindungslinie liegen, die Messrohrlängsachse ebenfalls waagerecht ausgerichtet ist, die Magnetfelderzeugungseinrichtung vertikal ausgerichtet ist und ein Magnetfeld in Richtung des Erdschwerefeldes erzeugt, wobei die auf das Messrohr (bzw. auf ein das Messrohr umgebendes Gehäuse) typischerweise aufgesetzte Messgeräteelektronik mit Transmitter und Anzeige vertikal nach oben weist. Die Messelektroden und die Stromkreiselektroden sind an bekannten Positionen fest im Messrohr verbaut. Bei Standardausrichtung ist demzufolge auch bekannt, welche Elektrode sich in Bezug auf die Richtung des Erdschwerefeldes an höchster Position befindet, und auch ist natürlich bekannt, welche der Elektroden die höchste, welche Elektrode die zweithöchste usw. Position einnimmt.

Die Istmontage weicht in der Praxis manchmal von der Standardmontage ab, was unterschiedliche Gründe haben kann, beispielsweise räumliche Gegebenheiten, die eine Standardmontage nicht erlauben, oder auch absichtlich abweichende Montagen, beispielsweise um bestimmte Ablesepositionen in Bezug auf eine Geräteanzeige zu ermöglichen. So kommt es bei von der Standardmontage abweichenden Istmontagen häufig beispielsweise zu einer Überkopfmontage oder zu Schwenkmontagen um +-90° um die Längsachse des Messrohres.

Bei einer Ausgestaltung des Verfahrens umfassen die Informationen über die von der Standardmontage abweichende Istmontage, in der das magnetisch-induktive Durchflussmessgerät tatsächlich verbaut ist, wenigstens einen Schwenkwinkel bezüglich einer Drehachse, insbesondere wobei die Drehachse die Messrohrlängsachse ist (Ausrichtung in Strömungsrichtung des Mediums). In einer bevorzugten Ausgestaltung werden Schwenkwinkel bezüglich dreier linear unabhängiger - insbesondere kartesischer - Drehachsen erfasst.

Vorzugsweise weist das magnetisch-induktive Durchflussmessgerät einen Beschleunigungssensor auf, der den einen oder die mehreren Schwenkwinkel ermittelt. Aus den Einbaupositionen der Messelektroden und der Stromkreiselektroden im magnetisch-induktiven Durchflussmessgerät bei der Standardmontage können dann die neuen absoluten Positionen der Messelektroden und der Stromkreiselektroden berechnet werden durch Transformation der Einbaupositionen mit einer Drehmatrix oder mehreren Drehmatrizen. Durch Sortieren der absoluten Positionen nach ihrer Höhe lässt sich einfach ermitteln, welche Elektroden bei absinkendem Füllstand des Mediums in dem Messrohr als erste Elektrode, zweite Elektrode usw. trockenliegen.

Die beschriebenen Verfahren sind sämtlich realisiert bei magnetisch-induktiven Durchflussmessgeräten des eingangs genannten Typs. Um das erfindungsgemäße Verfahren durchführen zu können, sind bei den entsprechenden erfindungsgemäßen Durchflussmessgeräten im Bereich des Messrohrs mit Kontakt zum Medium zumindest bei vollständig mediumgefüllten Messrohr eine erste Stromkreiselektrode und eine zweite Stromkreiselektrode angeordnet, wobei die Stromkreiselektroden außerhalb des Messrohres mit einer Stromquelle verbunden sind und in einem Füllstandmessbetrieb der Stromquelle ein Soll-Messstrom vorgegeben wird, mit dem die Stromkreiselektroden beaufschlagt werden. Die Stromkreiselektroden sind so angeordnet, dass sich ein Füllstandstromkreis zumindest bei vollständig mediumgefülltem Messrohr im Medium über einen Mediumstrompfad schließt, wobei der Mediumstrompfad den Strömungsquerschnitt des Messrohrs, in dem die Messelektroden liegen, passiert, sodass sich ein elektrischer Spannungsabfall zwischen den Stromkreiselektroden im Medium ergibt.

Bei allen magnetisch-induktiven Durchflussmessgeräten ist die Steuer- und Auswerteeinheit so ausgestaltet, dass sie in dem Füllstandmessbetrieb das Verfahren zur Realisierung des Füllstandmessbetriebs ausführt.

Erfindungsgemäße magnetisch-induktive Durchflussmessgeräte können in unterschiedlicher Weise konstruktiv ausgestaltet werden. Bei einer vorteilhaften Ausgestaltung ist vorgesehen, dass wenigstens eine der Stromkreiselektroden als endseitiger leitfähiger Flansch des Messrohrs (mit Mediumkontakt) ausgebildet ist.

Eine Weiterbildung dieses magnetisch-induktiven Durchflussmessgeräts zeichnet sich dadurch aus, dass eine der Stromkreiselektroden sowohl als leitfähiger Flansch im Einströmbereich wie auch als leitfähiger Flansch im Ausströmbereich des Messrohrs ausgebildet ist.

Bei allen Ausgestaltungen, bei denen eine Stromkreiselektrode als Flansch oder als Anschlussstück des magnetisch-induktiven Durchflussmessgeräts ausgebildet ist, bietet es sich an, diese Stromkreiselektrode auf das Referenzpotenzial zu legen, idealerweise also auf die elektrische Masse des Durchflussmessgeräts.

Bei einer bevorzugten Ausgestaltung des magnetisch-induktiven Durchflussmessgeräts ist eine der Stromkreiselektroden an einem oberen Scheitelpunkt eines Messrohrquerschnitts quer zur Messrohrachse angeordnet, insbesondere am höchsten Scheitelpunkt des Messrohrquerschnitts, wobei vorzugsweise davon ausgegangen wird, dass der obere Scheitelpunkt bei Standardmontage des magnetisch-induktiven Durchflussmessgeräts vorliegt. Mit dieser wird sehr frühzeitig erkannt, wenn sich das Messrohr von einem vollständig gefüllten Zustand zu einem teilgefüllten Zustand entwickelt.

Bei einer weiteren vorteilhaften Ausgestaltung des magnetisch-induktiven Durchflussmessgeräts ist eine der Stromkreiselektroden im Bereich des Messrohrs axial versetzt zu einer Messelektrodenebene, in der die Messelektroden angeordnet sind und die senkrecht zur axialen Erstreckung des Messrohrs verläuft, angeordnet sind. Bevorzugt ist diese Stromkreiselektrode zwischen dem Einströmbereich und dem Ausströmbereich angeordnet, sie könnte beispielsweise in die Wandung des Messrohrs eingelassen sein, wo sie entsprechend elektrisch isoliert werden muss. Bei einer weiteren Ausgestaltung sind beide Stromkreiselektroden im Bereich des Messrohrs axial versetzt zu der Messelektrodenebene und zwischen dem Einströmbereich und dem Ausströmbereich angeordnet.

Bei einer alternativen Variante des magnetisch-induktiven Durchflussmessgeräts ist eine der Stromkreiselektroden in der Messelektrodenebene angeordnet, auch beide Stromkreiselektroden können in der Messelektrodenebene angeordnet sein. Diese Variante hat fertigungstechnische Vorteile, da nur ein begrenzter Bereich des Messrohrs zur Realisierung der Messelektroden und der Stromkreiselektroden bearbeitet werden muss (insbesondere wenn diese auf einer Umfangslinie des Messrohrs liegen), es hat sich aber herausgestellt, dass bessere Ergebnisse hinsichtlich der Füllstandbestimmung des Mediums erzielt werden können, wenn die Stromkreiselektroden axial, also in Strömungsrichtung des Mediums versetzt zu den Messelektroden angeordnet sind, was also den zuvor beschriebenen Ausführungsbeispielen entspricht.

Im Einzelnen gibt es nun eine Vielzahl von Möglichkeiten, das erfindungsgemäße Verfahren und das erfindungsgemäße magnetisch-induktive Durchflussmessgerät auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: schematisch ein Verfahren zum Betreiben eines magnetisch-induktiven Durchflussmessgeräts und ein entsprechendes magnetisch-induktives Durchflussmessgerät im Durchflussmessbetrieb, wie aus dem Stand der Technik bekannt,
- Fig. 2a, 2b: schematisch ein Verfahren zum Betreiben eines magnetisch-induktiven Durchflussmessgeräts und ein entsprechendes magnetisch-induktives Durchflussmessgerät in einem neuartigen Füllstandmessbetrieb,
- Fig. 3: schematisch charakteristische Zeitverläufe des der Stromquelle vorgegebenen Soll-Messstroms und des messtechnisch erfassten Messstroms,
- Fig. 4: schematisch charakteristische Zeitverläufe der messtechnisch erfassten Einspeisespannung und der von der Stromquelle eingestellten Ausgangsspannung,
- Fig 5a-5c: schematisch magnetisch-induktive Durchflussmessgeräte in Standardmontage und von der Standardmontage abweichender Istmontage und
- Fig. 6a-6d: schematisch verschiedene Realisierungen von Stromkreiselektroden in einem magnetisch-induktiven Durchflussmessgerät.

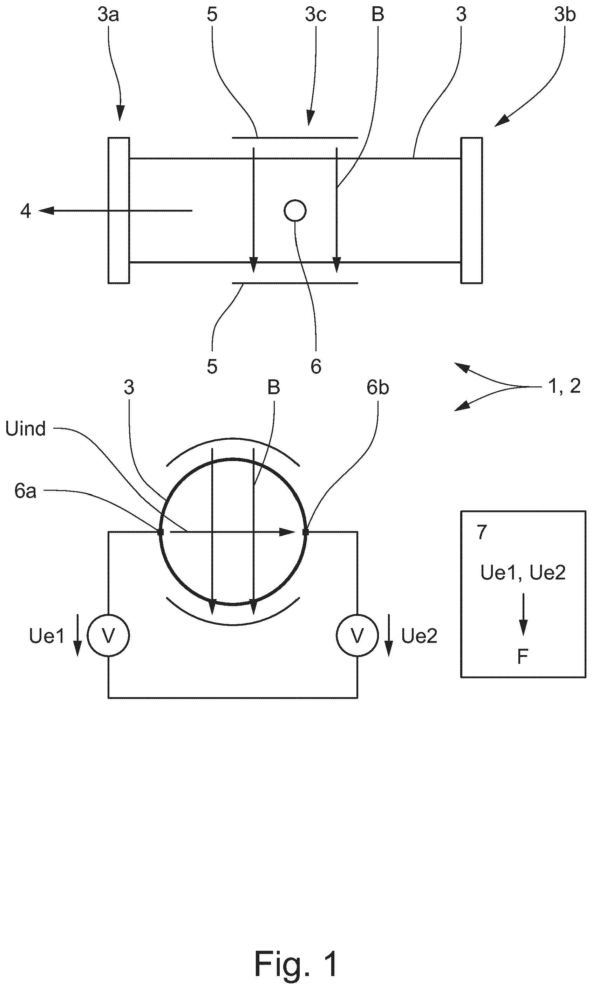

Fig. 1 zeigt ein Verfahren 1 zum Betreiben eines magnetisch-induktiven Durchflussmessgeräts 2 sowie ein magnetisch-induktives Durchflussmessgerät 2, das dieses Verfahren 1 durchführt, wie sie aus dem Stand der Technik bekannt sind. Gezeigt ist der Durchflussmessbetrieb, bei dem es sich um den "Normalbetrieb" eines magnetisch-induktiven Durchflussmessgeräts 2 handelt, bei dem es um die Erfassung des Mediumdurchflusses durch das Durchflussmessgerät 2 geht.

Das magnetisch-induktive Durchflussmessgerät 2 weist ein Messrohr 3 mit einem Einströmbereich 3a, einem Ausströmbereich 3b und mit einem zwischen dem Einströmbereich 3a und dem Ausströmbereich 3b liegenden Messbereich 3c zum Führen eines strömenden Mediums 4 durch das Durchflussmessgerät 2 auf. Als Messrohr 3 wird also der gesamte zur Führung des Mediumstroms dienende Bereich des Durchflussmessgeräts 2 verstanden, einschließlich etwaiger Anschlussteile, wie den hier angedeuteten Flanschen im Einströmbereich 3a und im Ausströmbereich 3b.

Eine Magnetfelderzeugungseinrichtung 5 erzeugt im Durchflussmessbetrieb ein das Messrohr 3 im Messbereich 3c senkrecht zur Strömungsrichtung des Mediums 4 durchsetzendes Magnetfeld B. In dem Medium 4, das eine elektrische Mindestleitfähigkeit aufweisen muss, damit das Messprinzip funktioniert, wird aufgrund der in dem Magnetfeld B auf bewegte Ladungsträger ausgeübten Lorentzkraft und der dadurch bewirkten Ladungstrennung eine elektrische Spannung Uind induziert. Die induzierte elektrische Spannung Uind ist proportional zur mittleren Strömungsgeschwindigkeit des Mediums 4 in dem Strömungsquerschnitt im Messbereich 3c des Messrohrs 3, unter der Voraussetzung einer gleichbleibenden Magnetfeldstärke B.

Ein Messelektrodenpaar 6a, 6b ist im Messbereich 3c des Messrohrs 3 zum Abgreifen der in dem Medium 4 im Messrohr 3 induzierten elektrischen Spannung Uind angeordnet. Die Verbindungslinie zwischen den beiden Messelektroden 6a, 6b verläuft sowohl senkrecht zur Strömungsrichtung des Mediums wie auch senkrecht zu den Feldlinien des Magnetfeldes B, um einen maximalen Messeffekt zu erzielen. Die Messelektroden 6a, 6b sind elektrisch isoliert von der Wandung des Messrohrs 3 in die Wandung des Messrohrs 3 eingelassen. Eine Steuer- und Auswerteeinheit 7 ermittelt im Durchflussmessbetrieb aus der gemessenen induzierten elektrischen Spannung Uind einen Durchflussmesswert F. Die Darstellung in Fig. 1 (wie auch in den nachfolgenden Figuren) ist tatsächlich sehr schematisch. So ist nicht im Einzelnen dargestellt, wie die Messwerte der Elektrodenspannungen Ue1, Ue2 zu der Steuer- und Auswerteeinheit 7 gelangen. Auch ist nicht ausdrücklich dargestellt, dass sich die in dem Medium 4 induzierte elektrische Spannung Uind aus der Differenz der beiden Messelektrodenspannungen Ue1, Ue2 ergibt, darauf kommt es jedoch im Einzelnen auch nicht an oder ist dem Fachmann ohnehin bekannt.

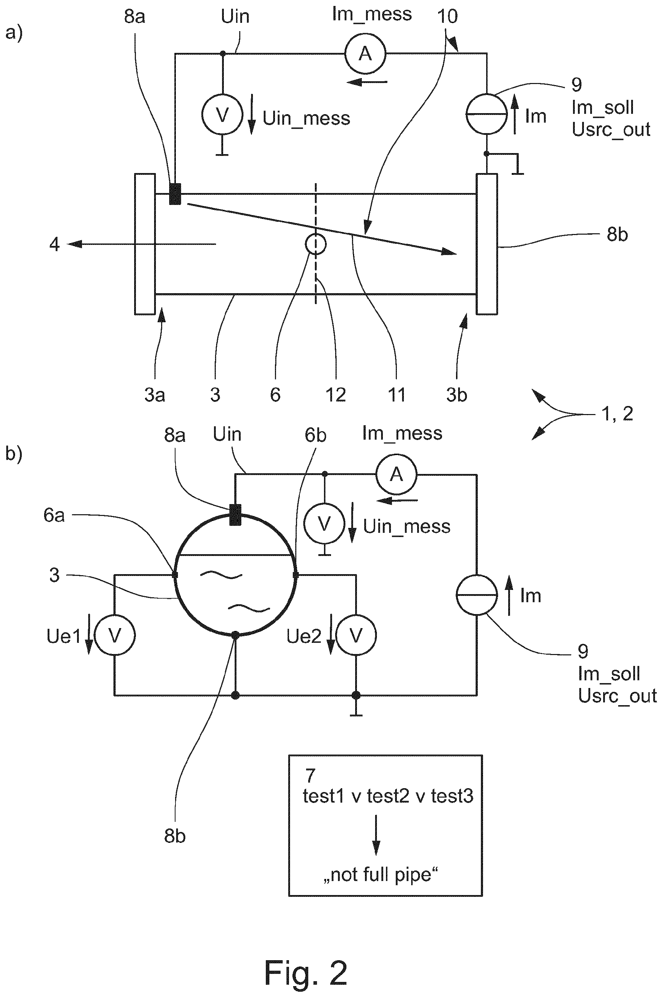

In den nachfolgenden Fig. 2 bis 6 sind in verschiedenen Aspekten ein Verfahren 1 zum Betreiben eines magnetisch-induktiven Durchflussmessgeräts 2 und ein entsprechendes magnetisch-induktives Durchflussmessgerät 2 dargestellt. Im Vordergrund steht jedoch nicht die Durchflussmessung, sondern die Bestimmung des Füllstands des das magnetisch-induktive Durchflussmessgerät 2 durchströmenden Mediums 4, nämlich über die Erkennung trockenliegender Messelektroden 6 und/oder Stromkreiselektroden 8, im Wesentlichen geht es also um einen von dem Durchflussmessbetrieb verschiedenen Füllstandmessbetrieb.

Den Ausführungsbeispielen in den Figuren 2 bis 6 ist gemeinsam, dass der Übersichtlichkeit halber die Magnetfelderzeugungseinrichtung nicht dargestellt ist. Ebenfalls gemeinsam ist den Ausführungsbeispielen, dass im Bereich des Messrohrs 3 eine erste Stromkreiselektrode 8a und eine zweite Stromkreiselektrode 8b angeordnet sind. Zumindest bei vollständig mediumgefülltem Messrohr 3 haben die Stromkreiselektroden 8 Kontakt zum Medium 4. Die Stromkreiselektroden 8a, 8b sind außerhalb des Messrohres 3 mit einer Stromquelle 9 verbunden. In dem Füllstandmessbetrieb wird der Stromquelle 9 ein Soll-Messstrom Im_soll vorgegeben, mit dem die Stromkreiselektroden 8a, 8b beaufschlagt werden. Die Stromkreiselektroden 8a, 8b sind so angeordnet, dass sich ein Füllstandstromkreis 10 zumindest bei vollständig mediumgefülltem Messrohr 3 im Medium 4 über einen Mediumstrompfad 11 schließt. Der Mediumstrompfad 11 passiert den Strömungsquerschnitt des Messrohrs 3, in dem die Messelektroden 6a, 6b liegen, sodass sich ein elektrischer Spannungsabfall zwischen den Stromkreiselektroden 8a, 8b im Medium 4 ergibt und damit auch ein elektrisches Potenzial in dem Medium 4, das von den Messelektroden 6a, 6b erfasst werden kann.

Wenn sich der Füllstand des Mediums 4 in dem Messrohr 3 ändert, werden - je nach Füllstand - Elektroden, also Stromkreiselektroden 8a, 8b und/oder Messelektroden 6a, 6b, mit dem Medium 4 nicht mehr oder nur stark eingeschränkt (über einen dünnen Mediumfilm, eine Restanhaftung des Mediums oder aufgeschäumtes Medium usw.) mit dem Medium in Kontakt stehen, jedenfalls im Vergleich zu der Situation, wenn das Medium 4 die Elektroden 6, 8 vollständig als Fluid bedeckt. Die in dem geschilderten Sinne nicht mehr mit dem Medium 4 bedeckten und in Kontakt stehenden Elektroden 6, 8 liegen dann trocken.

Im Füllstandmessbetrieb wird eine trockenliegende Stromkreiselektrode 8a, 8b und/oder eine trockenliegende Messelektrode 6a, 6b erkannt durch messtechnisches Erfassen und Auswerten wenigstens einer der folgenden Größen: wenigstens eine der erfassten Messelektrodenspannungen Ue1, Ue2, der von der Stromquelle 9 abgegebene Messstrom Im, eine von der Stromquelle 9 verursachte Einspeisespannung Uin an der ersten Stromkreiselektrode 8a.

Bei einer erkannten trockenliegenden Stromkreiselektrode 8a, 8b und/oder einer erkannten trockenliegende Messelektrode 6a, 6b wird der Status "trockenliegende Elektrode" signalisiert, also technisch erkennbar gemacht. Die Signalisierung des Status "trockenliegende Elektrode" erfolgt in den Ausführungsbeispielen durch Setzen eines entsprechenden Flags in der Steuer- und Auswerteinheit 7 sowie durch Anzeige der Meldung "not full pipe" auf einer Anzeige 16 des jeweils dargestellten magnetisch-induktiven Durchflussmessgeräts 2.

Bei dem Verfahren 1 und dem entsprechenden magnetisch-induktiven Durchflussmessgerät 2 wird das Medium 4 im Messrohr 3 als Teil des Füllstandstromkreises 10 eingebunden, sodass eine Änderung des Mediumfüllstandes Einfluss hat auf die elektrischen Eigenschaften und das elektrische Verhalten des Füllstandstromkreises 10 selbst (elektrischer Widerstand des Füllstandstromkreises) und auch auf dessen unmittelbare Umgebung (Änderung des Spannungsabfalls im Medium 4 entlang des Mediumstrompfades 11). Durch Beobachtung des elektrischen Verhaltens des Füllstandstromkreises 10 kann auf einfache Weise darauf geschlossen werden, ob Stromkreiselektroden 8a, 8b und/oder Messelektroden 6a, 6b trockenliegen. Damit kann auch auf den Füllstand des Mediums 4 in dem Messrohr 3 geschlossen werden, jedenfalls orientiert an den Positionen der als trockenliegend erkannten Elektroden 6, 8.

Das in Fig. 2 dargestellte magnetisch-induktive Durchflussmessgerät 2 und das mit diesem magnetisch-induktiven Durchflussmessgerät 2 durchgeführte Verfahren 1 arbeitet mit allen zuvor genannten unterschiedlichen elektrischen Größen des Füllstandstromkreises 10, die messtechnisch erfasst und ausgewertet werden. Die Messelektrodenspannungen Ue1, Ue2 sind leicht beobachtbar, da sie für den Durchflussmessbetrieb ohnehin erfasst werden. Der von der Stromquelle 9 abgegebene Messstrom Im, wird von der Stromquelle 9 als Regelgröße erfasst und ist so verfügbar, er kann aber auch durch separate Messung leicht bestimmt werden, wie aus Fig. 2b ersichtlich ist. Die von der Stromquelle 9 verursachte Einspeisespannung Uin an der ersten Stromkreiselektrode 8a lässt sich messtechnisch ohne großen Aufwand erfassen und so dem Verfahren 1 verfügbar machen. Bei anderen Realisierungen des Verfahrens 1 und des damit verbundenen magnetisch-induktiven Durchflussmessgeräts 2 kann auch nur eine der drei Größen erfasst und ausgewertet werden, es kann auch eine Kombination von zweien der genannten drei Größen Messelektrodenspannung(en) Ue1, Ue2, von der Stromquelle 9 abgegebener Messstrom Im, von der Stromquelle 9 verursachte Einspeisespannung Uin an der ersten Stromkreiselektrode 8a erfasst und ausgewertet werden. Durch die Kombination mehrerer der erfassten und ausgewerteten Größen lassen sich genauere oder zuverlässigere Aussagen treffen, welche Elektrode 6, 8 tatsächlich trockenliegt bzw. welche Elektroden tatsächlich trockenliegen.

Fig. 2a zeigt das magnetisch-induktive Durchflussmessgerät 2 schematisch in Seitenansicht, bei dem das Messrohr 3 vollständig gefüllt ist. Fig. 2b zeigt das magnetisch-induktive Durchflussmessgerät 2 in Achsrichtung des Messrohrs 3 gesehen, wobei das Messrohr 3 nur teilgefüllt ist; der Pegel des Mediums 4 steht oberhalb der Messelektroden 6a, 6b aber unterhalb der ersten Stromkreiselektrode 8a, die also trockenliegt.

Da das Messrohr 3 in Fig. 2a vollständig mit dem eine Mindestleitfähigkeit aufweisenden Medium 4 gefüllt ist, kann sich ein Mediumstrompfad 11 im Medium 4 ausbilden. Der Mediumstrompfad 11 verläuft von der ersten Stromkreiselektrode 8a, die elektrisch isoliert in das Messrohr 3 eingelassen ist, zu der als Flansch ausgebildeten zweiten Stromkreiselektrode 8b (von links oben nach rechts), wobei der Flansch auch elektrisch isoliert ist gegenüber dem anschließenden Bereich des Messrohrs 3. Die Positionen der Stromkreiselektroden 8a, 8b sind so gewählt, dass der Mediumstrompfad 11 den Strömungsquerschnitt 12 des Messrohrs 3, in dem die Messelektroden 6a, 6b liegen, passiert, sodass sich ein elektrischer Spannungsabfall zwischen den Stromkreiselektroden 8a, 8b im Medium 4 ergibt und diese elektrische Spannung im Medium 4 von den Messelektroden 6a, 6b detektierbar ist. Die Stromkreiselektroden 8a, 8b sind so angeordnet, dass der Mediumstrompfad 11 in seinem Verlauf eine axiale Erstreckung hat, also in Strömungsrichtung des Mediums 4 bzw. in Richtung der Längsachse des Messrohrs 3, was sich als besonders vorteilhaft für die Erfassbarkeit der elektrischen Spannung in dem Medium 4 durch die Messelektroden 6a, 6b herausgestellt hat.

In den Ausführungsbeispielen wird die erste Stromkreiselektrode 8a von der Stromquelle 9 auf ein Einspeisepotenzial Uin gelegt und die zweite Stromkreiselektrode 8b wird auf ein Referenzpotenzial gelegt, wobei das Referenzpotenzial das elektrische Bezugspotenzial ist, auf das bezogen auch die Messelektrodenspannungen Ue1, Ue2 gemessen werden. In den Ausführungsbeispielen ist das Referenzpotenzial gleichzeitig die elektrische Masse des magnetisch-induktiven Durchflussmessgeräts 2.

Bei einem hier nicht dargestellten Ausführungsbeispiel, das sich jedoch anhand von Fig. 2a einfach erläutern lässt, sind beide Flansche, also ein- und auslaufseitiger Flansch des Messrohrs 3, als zweite Stromkreiselektrode 8b ausgebildet und demnach mit der elektrischen Gerätemasse verbunden. Der Mediumstrompfad 11 ist dann zweigeteilt, er verläuft zum einen wie in Fig. 2a eingezeichnet, zum anderen aber zusätzlich auch von der ersten Stromkreiselektrode 8a zu dem linksseitigen Flansch.

Das bei dem in Fig. 2 dargestellten magnetisch-induktiven Durchflussmessgerät 2 implementierte Verfahren 1 zeichnet sich dadurch aus, dass im Füllstandmessbetrieb zum Test test1 einer trockenliegenden Stromkreiselektrode 8a, 8b der von der Stromquelle 9 abgegebene Messstrom Im messtechnisch erfasst wird. Die messtechnischen Erfassung des von der Stromquelle 9 abgegebenen Messstroms Im besteht im vorliegenden Fall in der Verwendung eines Strommesswiderstandes, der seriell in den Füllstandstromkreis 10 geschaltet ist und in Fig. 2 als Amperemeter A symbolisiert ist. Die Messung des messtechnisch erfassten Messstroms Im_mess erfolgt dann durch die Messung des Spannungsabfalls über dem Strommesswiderstand. Unterschreitet der messtechnisch erfasste Messstrom Im_mess den der Stromquelle 9 vorgegebenen Soll-Messstrom Im_soll, wird wenigstens eine trockenliegende Stromkreiselektrode 8a, 8b erkannt. Im vorliegenden Fall wird überprüft, ob der gemessene Messstrom Im_mess nahe null ist. Wenn aufgrund eines absinkenden Medium-Füllstands der Füllstandstromkreis 10 unterbrochen wird, kann die reale Stromquelle 9 den vorgegebenen Soll-Messstrom Im_soll nicht mehr durch den Füllstandstromkreis 10 treiben, was ein zuverlässiger Indikator für eine trockenliegende Stromkreiselektrode 8 ist.

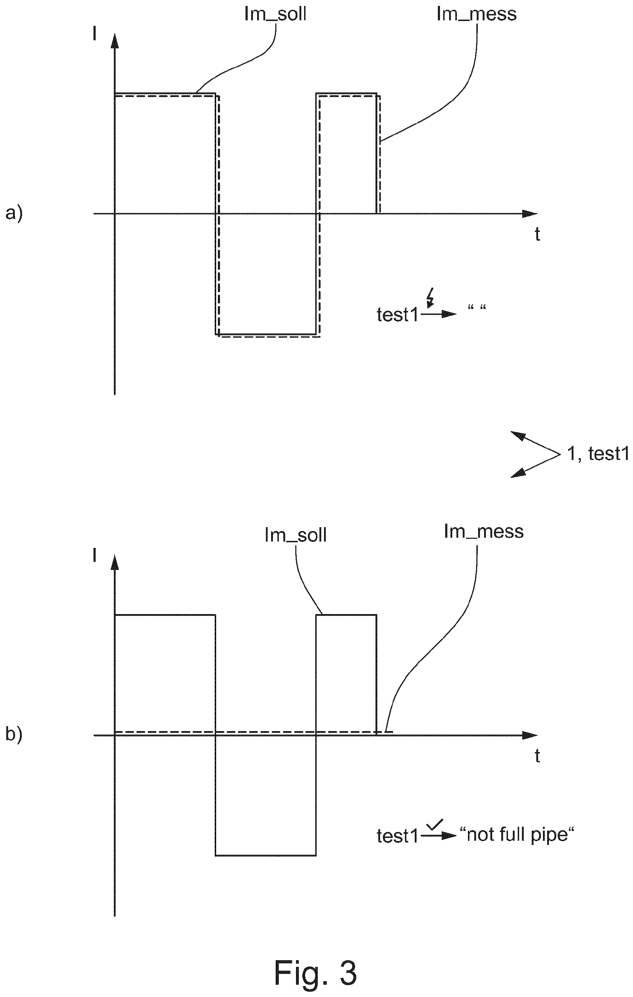

Die Fig. 3a, 3b zeigen die Kurvenverläufe der Größen, die Grundlage für den beschriebenen Test test1 auf eine trockenliegende Stromkreiselektrode 8a, 8b sind. Fig. 3a zeigt den Fall nicht trockenliegender Stromkreiselektroden 8a, 8b, bei dem der Füllstandstromkreis 10 intakt ist, also entsprechend der Situation gemäß Fig. 2a, sodass die Stromquelle 9 einen Messstrom Im in den Füllstandstromkreis 10 einspeisen kann und der gemessene Messstrom Im_mess in seinem Verlauf und seiner Höhe dem Soll-Messstrom Im_soll entspricht. Der Test test1 auf eine trockenliegende Stromkreiselektrode 8a, 8b schlägt daher fehl, sodass der Status "trockenliegende Elektrode" nicht signalisiert wird (" "). Fig. 3b zeigt das korrespondierende Ergebnis im Fall der trockenliegenden Stromkreiselektrode 8a gemäß Fig. 2b, bei dem der erfasste Messstrom Im_mess aufgrund des unterbrochenen Füllstandstromkreises 10 praktisch null ist und der Test test1 zum Signalisieren einer trockenliegenden Elektrode führt durch Ausgabe der Meldung "not full pipe".

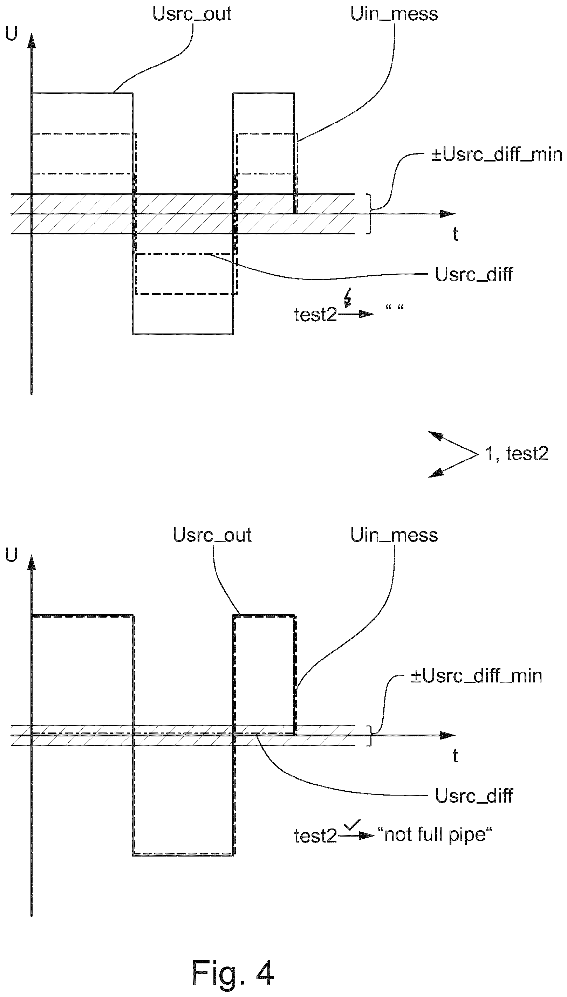

Bei dem Verfahren 1 in dem magnetisch-induktiven Durchflussmessgerät 2 gemäß Fig. 2 ist im Füllstandmessbetrieb ein weiterer Test test2 auf eine trockenliegende Stromkreiselektrode 8a, 8b vorgesehen, der anhand entsprechender Kurvenverläufe in den Fig. 4a (keine trockenliegende Elektrode) und 4b (trockenliegende Elektrode) erläutert wird. Bei diesem Test test2 wird die Spannungsdifferenz Usrc_diff zwischen der messtechnisch erfassten Einspeisespannung Uin_mess an der ersten Stromkreiselektrode 8a und einer von der Stromquelle 9 eingestellten Stromquellen-Ausgangsspannung Usrc_out ermittelt. Eine trockenliegende Stromkreiselektrode 8a, 8b wird dann festgestellt, wenn der Betrag der ermittelten Spannungsdifferenz kleiner ist als eine vorgegebene minimale Spannungsdifferenz Usrc_diff_min, es wird also die Bedingung Usrc_diff=(Usrc_out - Uin_mess) < Usrc_diff_min überprüft. Es kann auch auf die Spannungsdifferenz null geprüft werden, wobei auch hier eine endliche Messgenauigkeit berücksichtigt werden sollte. Bei diesem Test wird der Umstand genutzt, dass der von der Stromquelle 9 eingestellte Messstrom Im einen Spannungsabfall erzeugt auf dem Weg von der Stromquelle 9 bis zur ersten Stromkreiselektrode 8, der gleichzeitig Indikator für den fließenden Messstrom Im ist, ohne dass der Messstrom Im direkt gemessen werden müsste. Fig. 4a veranschaulicht diesen Test test2 bei nicht trockenliegender Stromkreiselektrode 8a. Im Fall der trockenliegenden Stromkreiselektrode 8a gemäß Fig. 4b fließt keim Messstrom Im, sodass aufgrund des fehlenden Spannungsabfalls die beiden Spannungen Usrc_out und Uin_mess gleich und die Spannungsdifferenz Usrc_diff null ist und damit kleiner als Usrc_diff_min ist. Der Test test2 auf eine trockenliegende Stromkreiselektrode geht positiv aus und es erfolgt die Signalisierung des Status einer trockenliegenden Stromkreiselektrode 8a, 8b durch Ausgabe der Meldung "not full pipe".

Das Verfahren 1 und das magnetisch-induktive Durchflussmessgerät 2 gemäß Fig. 2 umfassen ferner einen Test test3 auf eine trockenliegende Messelektrode 6a, 6b. Dazu wird ein Spannungsverhältnis Ue1/Uin_mess, Ue2/Uin_mess der erfassten Messelektrodenspannung Ue1, Ue2 der jeweiligen Messelektrode 6a, 6b zu der messtechnisch erfassten Einspeisespannung Uin_mess an der ersten Stromkreiselektrode 8a ermittelt. Eine trockenliegende Messelektrode 6a, 6b wird erkannt, wenn das ermittelte Spannungsverhältnis der betreffenden Messelektrode 6a, 6b einen vorgegebenen Spannungsverhältniswert Urel unterschreitet. Es wird also geprüft, ob die Bedingung Ue1/Uin_mess < Urel ist, oder entsprechend, ob Ue2/Uin_mess < Urel ist. Bei einer alternativen Ausgestaltung des Tests test3 wird einfach überprüft, ob die erfasste Messelektrodenspannung Ue1, Ue2 unter einen vorgegebenen niedrigen Wert fällt oder auch null ist. Bei dieser Vorgehensweise wird jedoch nicht berücksichtigt, dass die Messelektrodenspannung Ue1, Ue2 von der Leitfähigkeit des Mediums 4 abhängig ist, wenn ein Messstrom Im gleichbleibender Höhe in den Füllstandstromkreis 10 eingeprägt wird. Dies wird bei der zuerst dargestellten Ausprägung des Tests test3 berücksichtigt. Die Messkurven der beteiligten Größen sind nicht separat dargestellt, die Verläufe sehen aber sinngemäß aus wie die in den Fig. 3 und 4 dargestellten Verläufe.

Um die Zuverlässigkeit des Tests test3 zu erhöhen, wird erst dann auf eine trockenliegende Messelektrode 6a, 6b geschlossen, wenn zusätzlich der Test test1, test2 auf eine trockenliegende Stromkreiselektrode 8a, 8b negativ ausgefallen ist, denn es kann keine Messelektrodenspannung Ue1, Ue2 erfasst werden, wenn kein Messstrom Im in den Füllstandstromkreis 10 eingespeist wird.

Bei den gezeigten Verfahren 1 gemäß den Fig. 2 bis 6 wird der Stromquelle 9 im Füllstandmessbetrieb ein Soll-Messstrom Im_soll mit einem charakteristischen Zeitverlauf vorgegeben, der also an sich einen durch seinen Verlauf bedingten höheren Erkennungswert hat, insbesondere einen höheren Erkennungswert als ein Gleichwert oder auch eine harmonische Schwingung. Die Fig. 3 und 4 zeigen beispielsweise eine Rechteckfolge mit Impulslängen im Verhältnis 4/3/2. Bei der Auswertung einer der messtechnisch erfassten Größen, also einer der erfassten Messelektrodenspannungen Ue1, Ue2, des von der Stromquelle 9 abgegebenen Messstroms Im oder der von der Stromquelle 9 verursachten Einspeisespannung Uin an der ersten Stromkreiselektrode 8a, wird überprüft, ob die messtechnisch erfasste Größe einen entsprechenden charakteristischen Zeitverlauf aufweist. Wenn die messtechnisch erfasste Größe einen entsprechenden charakteristischen Zeitverlauf aufweist, wird die messtechnisch erfasste Größe als zuverlässig eingestuft, andernfalls wird sie als nicht zuverlässig eingestuft. Dies gilt insbesondere dann, wenn die erfasste Größe zwar einen von null verschiedenen Signalpegel aufweist, aber nicht den erwarteten charakteristischen Zeitverlauf zeigt. Das ist einleuchtend, wenn berücksichtigt wird, dass gerade der Signalpegel "null" in einigen Fällen kennzeichnend ist für eine trockenliegende Elektrode und naturgemäß keinen derartigen charakteristischen Zeitverlauf aufweisen kann.

In dem dargestellten Ausführungsbeispiel wird während des Füllstandmessbetriebs der Durchflussmessbetrieb ausgesetzt, insbesondere wird die Magnetfelderzeugungseinrichtung 5 nicht bestromt, sodass kein Magnetfeld B erzeugt wird und damit auch keine störende Induktionsspannung in dem Medium 4 auftreten kann.

Bei den hier dargestellten Ausführungsbeispielen des Verfahrens 1 und des magnetisch-induktiven Durchflussmessgeräts 2 ist ferner umgesetzt, dass bei erkanntem Status "trockenliegende Elektrode" zusätzlich signalisiert wird, welche der Stromkreiselektroden 8a, 8b und/oder der Messelektroden 6a, 6b trockenliegt.

Einige Ausgestaltungen des Verfahrens 1 und des korrespondierenden magnetisch-induktiven Durchflussmessgeräts 2 machen sich eine zusätzliche Information zunutze, nämlich darüber, welche der Elektroden 6a, 6b, 8a, 8b die höchstliegende Elektrode ist, oder auch eine Information darüber, in welcher Reihenfolge die Elektroden 6a, 6b, 8a, 8b am höchstliegenden sind. "Höchstliegend" meint eine Höhenangabe entgegengesetzt zur Richtung des Erdschwerefeldes gemessen. Ein abfallender Füllstand des Mediums 4 im Messrohr 3 führt in gemäß diesem Verständnis dazu, dass zuerst die am höchsten liegende Elektrode trocken liegt, dann die zweithöchste Elektrode trocken liegt usw. Diese Information über die Höhe einer Elektrode ist immer in Bezug auf den konkreten Einbauzustand des magnetisch-induktiven Durchflussmessgeräts 2 zu verstehen. Die Information über die Höhe der Elektroden 6, 8 kann dann sowohl dazu genutzt werden, einen nicht eindeutigen Füllstandtest test1, test2, test3 eindeutig zu machen, die Information kann aber auch dazu genutzt werden, das Ergebnis eines Füllstandtests test1, test2, test3 einem zusätzlichen Plausibilitätstest zu unterziehen.

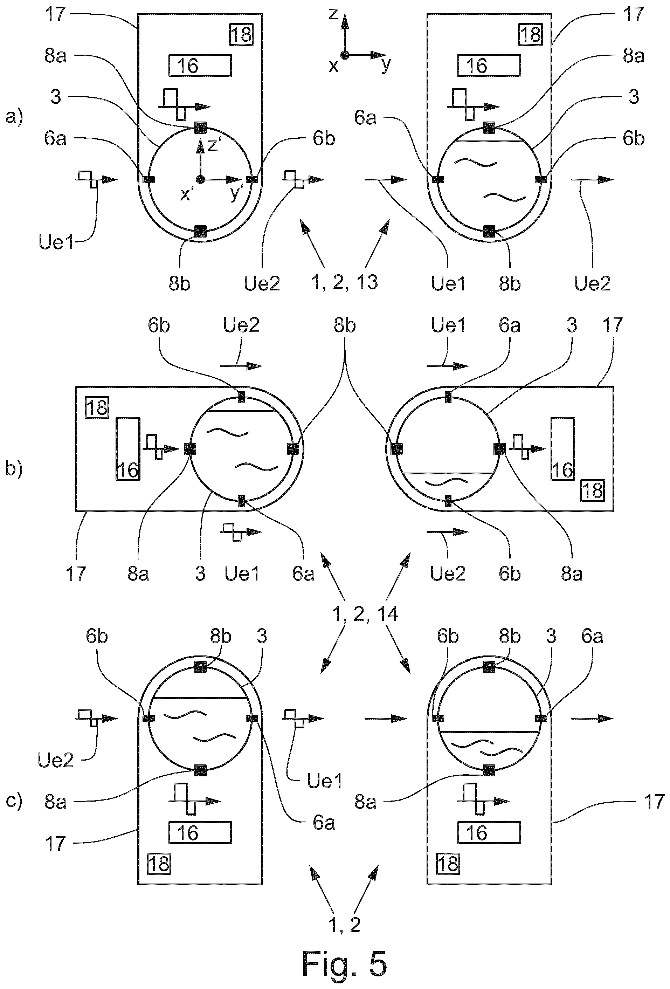

Fig. 5 zeigt mehrere magnetisch-induktive Durchflussmessgeräte 2 mit einem das Messrohr 3 umgebenden Gehäuse 17 und einer in dem Gehäuse vorgesehenen Anzeige 16, auf der beispielsweise Durchflussmesswerte angezeigt werden. Die magnetisch-induktiven Durchflussmessgeräte 2 werden in verschiedenen Einbausituationen gezeigt, wobei das in Fig. 5a dargestellte Gerätekoordinatensystem x, y, z für die Standardmontage 13, die Ausrichtung des magnetisch-induktiven Durchflussmessgeräts in Standardmontage 13 angibt: Die x-Achse zeigt senkrecht zum Erdschwerefeld und in Achsrichtung des Messrohrs 3, die y-Achse liegt in einem Messrohrquerschnitt, senkrecht zum Erdschwerefeld und zeigt in Richtung der Verbindungslinie der Messelektroden 6a, 6b, die z-Achse zeigt entgegen der Richtung des Erdschwerefeldes. Die Standardmontage 13 bezieht sich auf die übliche und vom Hersteller empfohlene Einbauposition des magnetisch-induktiven Durchflussmessgeräts 2 in den Prozess, der nicht dargestellt ist. Die Anzeige 16 in dem Gehäuse 17 ist im oberen Bereich von Gehäuse 17 positioniert. Das aus Gründen der Übersichtlichkeit nur in Fig. 5a dargestellte ortsfeste Koordinatensystem x, y, z muss in das Zentrum eines jeden Messrohrs 3 in den Fig. 5a, 5b und 5c gedacht werden, also dorthin, wo in der linken Abbildung von Fig. 5a in das Zentrum des Messrohrs 3 das gestrichene Gerätekoordinatensystem x', y', z' eingezeichnet ist. Das Gerätekoordinatensystem ist ortsfest in Bezug auf das Durchflussmessgerät 2, bewegt sich mit der Position des Durchflussmessgerätes auch abweichend von der Standardmontage 13. In dem Ausführungsbeispiel zeigt die x'-Achse unabhängig von der Montage des Durchflussmessgerätes 2 immer in Richtung der Messrohrachse, die y'-Achse zeigt immer in Richtung der Verbindungslinie der Messelektroden 6a, 6b und die z'-Achse zeigt immer in Richtung auf die Anzeige 16.

Die Fig. 5b und 5c zeigen jeweils von der Standardmontage abweichende Istmontagen 14 des magnetisch-induktiven Durchflussmessgeräts 2. In Fig. 5b ist das magnetisch-induktive Durchflussmessgerät 2 um die x-Achse um den Schwenkwinkel alpha_x = 90° geschwenkt (links) bzw. um alpha_x = -90° geschwenkt (rechts) gegenüber der Standardmontage 13. Fig. 5c zeigt die Überkopfmontage des magnetisch-induktiven Durchflussmessgeräts 2, also bei einer Schwenkung um den Schwenkwinkel alpha_x = 180° um die x-Achse. Fig. 5 gibt insoweit einen Überblick über die Standardmontage 13 und davon abweichenden Istmontagen 14 von magnetisch-induktiven Durchflussmessgeräten 2.

Bei den in Fig. 5 gezeigten Verfahren 1 ist ein Test test3 auf trockenliegende Messelektroden 6a, 6b umgesetzt, bei dem die Messelektrodenspannungen Ue1, Ue2 ausgewertet werden. Angedeutet ist jeweils die messtechnisch erfasste Einspeisespannung Uin_mess sowie die erfassten Messelektrodenspannungen Ue1, Ue2. Die Einspeisespannung hat auch hier einen charakteristischen Zeitverlauf und verursacht entsprechende Messelektrodenspannungen Ue1, Ue2 geringeren Signalpegels, sofern die Messelektroden 6a, 6b nicht trockenliegen bzw. keine der Stromkreiselektroden 8a, 8b trockenliegen. In den Fig. 5a (rechts), 5b und 5c liegt jeweils mindestens eine der Elektroden 6a, 6b, 8a, 8b trocken.

Eine bei dem Verfahren 1 gemäß Fig. 5 umgesetzte Maßnahme, um eine genauere Information zu der Frage, welche Elektrode 6a, 6b, 8a, 8b trockenliegt, zu ermitteln, besteht darin, dass in dem magnetisch-induktiven Durchflussmessgerät 2 zunächst eine Information zumindest über die höchstliegende Elektrode 6a, 6b, 8a, 8b der Messelektroden 6a, 6b und Stromkreiselektroden 8a, 8b hinterlegt ist. Vorzugsweise wird dann diese Elektrode durch einen entsprechenden Test auf eine trockenliegende Messelektrode 6a, 6b oder einen entsprechenden Test auf eine trockenliegende Stromkreiselektrode 8a, 8b überprüft. Wenn beispielsweise die in Fig. 5a gezeigte Standardmontage 13 des magnetisch-induktiven Durchflussmessgeräts 2 herangezogen wird, dann haben die höchstliegenden Elektroden die Reihenfolge 8a, 6a/6b, 8b. In diesem Fall kann ein dedizierter Test test3 auf eine trockenliegende Messelektrode 6a, 6b nicht durchgeführt werden, da in jedem Fall die höchstliegende Stromkreiselektrode 8a als erste Elektrode trockenliegen muss, sodass der Füllstandstromkreis 10 unterbrochen ist und kein Signal mehr über die Messelektroden 6a, 6b detektierbar ist (Fig. 5a, rechts). Es ist hier sinnvoll, ausschließlich einen Test auf eine trockenliegende Stromkreiselektrode 8a, 8b durchzuführen.

Bei dem magnetisch-induktiven Durchflussmessgerät 2 gemäß Fig. 5b, links haben die höchstliegenden Elektroden die Reihenfolge 6b, 8a/8b, 6a. Ein positiver Test test3 auf eine trockenliegende Messelektrode 6a und ein gleichzeitig negativer Test test3 auf eine trockenliegende Messelektrode 6b führt zu einem Widerspruch, da die Messelektrode 6b als höchstliegende Messelektrode 6 zwar trockenliegen kann, ohne dass die Messelektrode 6a trockenliegt, aber nicht umgekehrt. Sinngemäßes gilt für die Einbausituation in Fig. 5b, rechts. Die Einbaupositionen gemäß Fig. 5b erlauben sowohl den Test auf trockenliegende Messelektroden 6 wie auch auf (zeitlich nachfolgend) trockenliegende Stromkreiselektroden 8a, 8b.

Bei der Überkopfmontage gemäß Fig. 5c lautet die Reihenfolge der höchstliegenden Elektroden 8b, 6a/6b, 8a. Wie auch für die Standardmontage 13 in Fig. 5a gilt hier, dass ein Test test3 auf eine trockenliegende Messelektrode 6a, 6b nicht sinnvoll ausgeführt werden kann, weshalb der Füllstandmessbetrieb auf den Test einer trockenliegenden Stromkreiselektrode 8a, 8b beschränkt wird.

Die Beispiele basieren also auf der Überprüfung, ob die höchstliegende Elektrode 6a, 6b, 8a, 8b als erste Elektrode als trockenliegende Elektrode erkannt worden ist. Bei mehreren als trockenliegend erkannten Elektroden 6a, 6b, 8a, 8b wird überprüft, ob jedenfalls auch die höchstliegende Elektrode 6, 8 als trockenliegend erkannt worden ist. Wenn Informationen über die Einbauhöhe mehrerer der Messelektroden 6a, 6b und Stromkreiselektroden 8a, 8b hinterlegt sind, wird bei Erkennung mehrerer trockenliegender Elektroden 6a, 6b, 8a, 8b überprüft, ob es sich dabei um die mehreren höchstliegenden Elektroden 6a, 6b, 8a, 8b handelt.

Das Verfahren 1 und die dargestellten magnetisch-induktiven Durchflussmessgeräte 2 in Fig. 5 zeichnen sich ferner dadurch aus, dass das magnetisch-induktive Durchflussmessgerät 1 die höchstliegende Elektrode 6a, 6b, 8a, 8b oder die mehreren höchstliegenden Elektroden 6a, 6b, 8a, 8b selbstständig ermittelt auf Grundlage der Einbaupositionen der Messelektroden 6a, 6b und der Stromkreiselektroden 8a, 8b im magnetisch-induktiven Durchflussmessgerät 2 bei einer Standardmontage 13 und auf Grundlage von wenigstens einer Abweichinformation über eine von der Standardmontage 13 abweichende Istmontage 14, in der das magnetisch-induktive Durchflussmessgerät 2 tatsächlich verbaut ist. Die Abweichinformation umfasst wenigstens einen Schwenkwinkel alpha_x, alpha_y, alpha_z bezüglich einer Drehachse x, y, z eines Gerätekoordinatensystems in Standardmontage 13. In den Ausführungsbeispielen handelt es sich um den Schwenkwinkel alpha_x in Bezug auf die Drehachse x in Achsrichtung des Messrohrs 3. Damit das Durchflussmessgerät die Istmontage 14 und die Abweichinformationen in Bezug auf die Standardmontage 13 selbstständig ermitteln kann, ist ein Beschleunigungssensor 18 im magnetisch-induktiven Durchflussmessgerät 2 verbaut, mit dem die Schwenkwinkel einfach ermittelt werden können. Bei bekannten Schwenkwinkeln alpha_x, alpha_y, alpha_z lassen sich die Höheninformationen der Elektroden 6, 8 in Istmontage 14 durch Anwendung von Rotationsmatrizen aus den Einbaupositionen der Elektroden 6, 8 in Standardmontage 13 einfach ermitteln.

Für alle dargestellten Ausführungsbeispiele (außer Fig. 1) gilt, dass die Steuer- und Auswerteeinheit 7 so ausgestaltet ist, dass sie in dem Füllstandmessbetrieb das in den Figuren dargestellte Verfahren 1 ausführt.

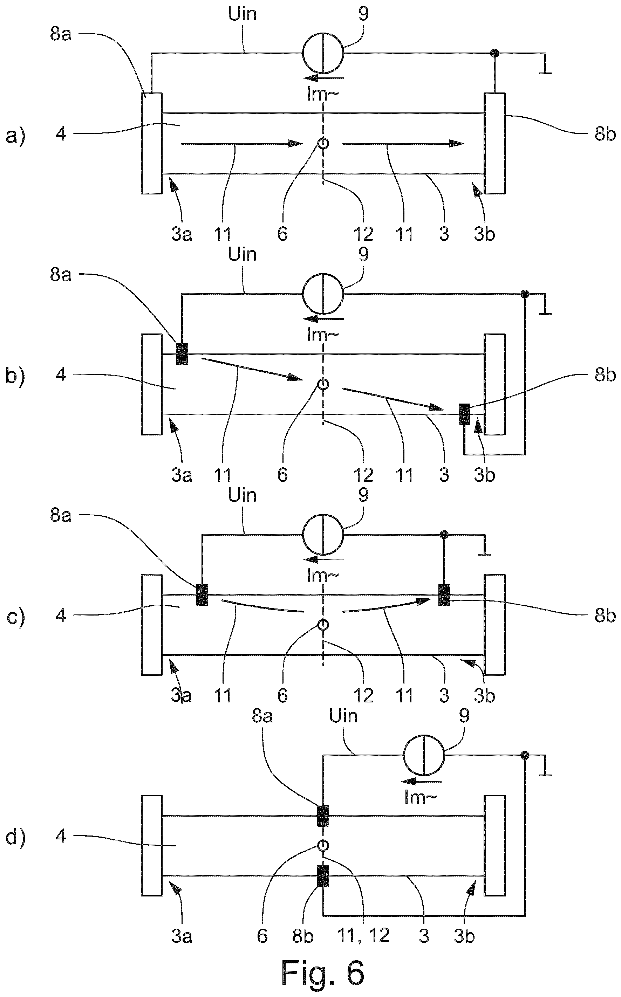

Die Fig. 6a bis 6d zeigen verschiedene Varianten der Umsetzung der Stromkreiselektroden 8a, 8b im Bereich des Messrohrs 3. Grundsätzlich müssen die Stromkreiselektroden 8a, 8b so ins Messrohr 3 eingesetzt oder in dem Messrohr 3 ausgebildet sein, dass sie nicht durch das Messrohr 3 kurzgeschlossen werden, denn der Leitfähigkeitsstromkreis 10 muss über das Medium 4, dort über den Mediumstrompfad 11 im Medium 4, geschlossen werden, damit die Füllstandmessung funktioniert.

In Fig. 2 ist bereits ein magnetisch-induktives Durchflussmessgerät 2 gezeigt worden, bei dem eine der Stromkreiselektroden 8b als endseitiger leitfähiger Flansch des Messrohrs 3 ausgebildet ist. Bei dem magnetisch-induktiven Durchflussmessgerät 2 gemäß Fig. 6a sind beide Stromkreiselektroden 8a, 8b als endseitiger leitfähiger Flansch des Messrohrs 3 ausgebildet, die erste Stromkreiselektrode 8a ist als der eine Flansch im Einströmbereich 3a angeordnet und die zweite Stromkreiselektrode 8b ist als der andere Flansch im Ausströmbereich 3b des Messrohrs 3 angeordnet. Hier sind die Flansche nach außen hin elektrisch isoliert, nicht jedoch innenseitig, sodass elektrischer Kontakt zum Medium 4 gewährleistet ist.

Bei den magnetisch-induktiven Durchflussmessgeräten 2 gemäß den Fig. 2a, 5b und 5c ist wenigstens eine der Stromkreiselektroden 8a im Bereich des Messrohrs 3 axial versetzt zu einer Messelektrodenebene 12, in der die Messelektroden 6a, 6b angeordnet sind und welche Messelektrodenebene 12 senkrecht zur axialen Erstreckung des Messrohrs 4 verläuft, angeordnet, die Messelektroden 6a, 6b liegen zudem zwischen dem Einströmbereich 3a und dem Ausströmbereich 3b. Bei den Ausführungsbeispielen nach den Fig. 6b und 6c trifft dies sogar auf beide der Stromkreiselektroden 8a, 8b zu. Die in diesen Ausführungsbeispielen gezeigte Positionierung der Stromkreiselektroden 8a, 8b geht zwar mit einem zusätzlichen konstruktiven Aufwand einher, da die Stromkreiselektroden 8a, 8b in die Wandung des Messrohrs 3 elektrisch isoliert und auch die mechanischen Festigkeitsanforderungen und die fluiden Dichtigkeitsanforderungen erfüllend eingebracht werden müssen. Jedoch bietet dies auch die Möglichkeit, die Stromkreiselektroden 8a, 8b besonders geschützt unterzubringen, sowohl gegen Kontakt von außen (da das Messrohr 3 üblicherweise von dem Gehäuse 17 umgeben ist) wie auch gegen Kontakt von innerhalb des Messrohres 3, beispielsweise durch abrasives Medium, da die Stromkreiselektroden 8a, 8b bündig abschließend mit der Messrohrwand oder sogar zurückspringend montiert werden können.

Bei dem magnetisch-induktiven Durchflussmessgerät 2 gemäß Fig. 6d sind die Stromkreiselektroden 8a, 8b in der Messelektrodenebene 12 angeordnet. Die Verbindungslinie zwischen den Stromkreiselektroden 8a, 8b steht senkrecht auf der Verbindungslinie zwischen den Messelektroden 6a, 6b, sodass der Mediumstrompfad 11, über den die Einspeisespannung Uin abfällt, unmittelbar die Messelektroden 6a, 6b passiert. Da die Messelektroden 6a, 6b mittig zwischen dem Einströmbereich 3a und dem Ausströmbereich 3b des Messrohrs 3 angeordnet sind, liegen auch die Stromkreiselektroden 8a, 8b mittig zwischen dem Einströmbereich 3a und dem Ausströmbereich 3b des Messrohrs 3.

Die Messelektroden 6a, 6b und die Stromkreiselektroden 8a, 8b liegen auf einer Umfangslinie des Messrohrs 3, was gewisse fertigungstechnische Vorteile mit sich bringt. Interessanterweise lassen sich aber mit den Ausgestaltungen, bei denen die Stromkreiselektroden 8a, 8b axial, also in Strömungsrichtung des Mediums 4 versetzt zu den Messelektroden 6a, 6b und damit auch der Messelektrodenebene 12 angeordnet sind, sodass auch der Mediumstrompfad 11 eine axiale Erstreckungskomponente im Messrohr 3 hat, bessere Ergebnisse hinsichtlich der Bestimmung der interessierenden elektrischen Größen erzielen, insbesondere der Messelektrodenspannungen Ue1, Ue2, was auf die anderen Ausführungsbeispiele durchgehend zutrifft, also auf die magnetisch-induktiven Durchflussmessgeräte 2 gemäß den Fig. 2,5 und 6a bis 6c.

Damit ein nicht vollständig gefülltes Messrohr 3 möglichst frühzeitig erkannt werden kann, zeichnen sich alle in den Figuren dargestellten magnetisch-induktiven Durchflussmessgeräte 2, dadurch aus, dass eine der Stromkreiselektroden 8, nämlich die erste Stromkreiselektrode 8a an einem oberen Scheitelpunkt eines Messrohrquerschnitts quer zur Messrohrachse angeordnet ist, tatsächlich ist immer der höchsten Scheitelpunkt des Messrohrquerschnitts gewählt worden; gemeint ist immer der obere Scheitelpunkt bei Standardmontage 13 des magnetisch-induktiven Durchflussmessgeräts 2.

### Bezugszeichen

- 1: Verfahren zum Betreiben eines magnetisch-induktiven Durchflussmessgeräts
- 2: magnetisch-induktives Durchflussmessgerät
- 3: Messrohr
- 3a: Einströmbereich
- 3b: Ausströmbereich
- 3c: Messbereich
- 4: Medium
- 5: Magnetfelderzeugungseinrichtung
- 6a, 6b: Messelektroden, Messelektrodenpaar
- 7: Steuer- und Auswerteeinheit
- 8a, 8b: erste und zweite Stromkreiselektrode
- 9: Stromquelle
- 10: Füllstandstromkreis
- 11: Mediumstrompfad im Füllstandstromkreis
- 12: Messelektrodenebene, in der die Messelektroden liegen
- 13: Standardmontage
- 14: Istmontage
- 16: Anzeige
- 17: Gehäuse
- 18: Beschleunigungssensor

- B: Magnetfeld
- Uind: im Medium induzierte elektrische Spannung
- F: Durchflussmesswert
- Im: Messstrom
- Im_soll: der Stromquelle vorgegebener Soll-Messstrom
- Im_mess: messtechnisch erfasster Messstrom
- Ue1, Ue2: Messelektrodenspannungen
- Uin: Einspeisepotenzial oder Einspeisespannung bezogen auf Referenzpotenzial
- Uin_mess: messtechnisch erfasste Einspeisespannung
- Usrc_out: von der Stromquelle eingestellte Ausgangsspannung
- Usrc_diff: Spannungsdifferenz zwischen der messtechnisch erfassten Einspeisespannung an der ersten Stromkreiselektrode und einer von der Stromquelle eingestellten Stromquellen- Ausgangsspannung
- Usrc_diff _min: vorgegebene minimale Spannungsdifferenz
- Urel: vorgegebener Spannungsverhältniswert
- test1: Test auf eine trockenliegende Elektrode
- test2: Test auf eine trockenliegende Elektrode
- test3: Test auf eine trockenliegende Elektrode
- x, y, z: Gerätekoordinatensystem in definierter Standardmontage
- x', y', z': Gerätekoordinatensystem in beliebiger Istmontage
- alpha_x: Schwenkwinkel um x-Achse
- alpha_y: Schwenkwinkel um y-Achse
- alpha_z: Schwenkwinkel um z-Achse

## Patentansprüche

1. Verfahren (1) zum Betreiben eines magnetisch-induktiven Durchflussmessgeräts (2), wobei das magnetisch-induktive Durchflussmessgerät (2) wenigstens ein Messrohr (3) mit einem Einströmbereich (3a), einem Ausströmbereich (3b) und mit einem zwischen dem Einströmbereich (3a) und dem Ausströmbereich (3b) liegenden Messbereich (3c) zum Führen eines strömenden Mediums (4) durch das Durchflussmessgerät (2), wenigstens eine Magnetfelderzeugungseinrichtung (5) zum Erzeugen eines das Messrohr (3) im Messbereich (3c) senkrecht zur Strömungsrichtung des Mediums (4) durchsetzenden Magnetfeldes (B), wenigstens ein Messelektrodenpaar (6a, 6b) im Messbereich (3c) des Messrohrs (3) zum Abgreifen einer in dem Medium (4) im Messrohr (3) induzierten elektrischen Spannung (Uind), und wenigstens eine Steuer- und Auswerteeinheit (7) umfasst, die in einem Durchflussmessbetrieb aus der gemessenen induzierten elektrischen Spannung (Uind) einen Durchflussmesswert (F) ermittelt,
**dadurch gekennzeichnet,**
**dass** im Bereich des Messrohrs (3) mit Kontakt zum Medium (4) zumindest bei vollständig mediumgefüllten Messrohr (3) eine erste Stromkreiselektrode (8a) und eine zweite Stromkreiselektrode (8b) angeordnet sind, dass die Stromkreiselektroden (8a, 8b) außerhalb des Messrohres (3) mit einer Stromquelle (9) verbunden sind und in einem Füllstandmessbetrieb der Stromquelle (9) ein Soll-Messstrom (Im_soll) vorgegeben wird, mit dem die Stromkreiselektroden (8a, 8b) beaufschlagt werden, wobei die Stromkreiselektroden (8a, 8b) so angeordnet sind, dass sich ein Füllstandstromkreis (10) zumindest bei vollständig mediumgefülltem Messrohr (3) im Medium (4) über einen Mediumstrompfad (11) schließt, wobei der Mediumstrompfad (11) den Strömungsquerschnitt des Messrohrs (3), in dem die Messelektroden (6a, 6b) liegen, passiert, sodass sich ein elektrischer Spannungsabfall zwischen den Stromkreiselektroden (8a, 8b) im Medium ergibt,
**dass** im Füllstandmessbetrieb eine trockenliegende Stromkreiselektrode (8a, 8b) und/oder eine trockenliegende Messelektrode (6a, 6b) erkannt wird durch messtechnisches Erfassen und Auswerten wenigstens einer der folgenden Größen: wenigstens eine der erfassten Messelektrodenspannungen (Ue1, Ue2), der von der Stromquelle (9) abgegebene Messstrom (Im), eine von der Stromquelle (9) verursachte Einspeisespannung (Uin) an der ersten Stromkreiselektrode (8a) und
**dass** bei einer erkannten trockenliegenden Stromkreiselektrode (8a, 8b) und/oder einer erkannten trockenliegende Messelektrode (6a, 6b) der Status "trockenliegende Elektrode" (dry) zumindest mittelbar signalisiert wird.

2. Verfahren (1) nach Anspruch 1, **dadurch gekennzeichnet, dass** bei erkanntem Status "trockenliegende Elektrode" zusätzlich signalisiert wird, welche der Stromkreiselektroden (8a, 8b) und/oder der Messelektroden (6a, 6b) trockenliegt, insbesondere wobei zusätzlich eine Füllstandangabe des Mediums (4) in dem Messrohr (3) angegeben wird.

3. Verfahren (1) nach Anspruch 1 oder 2, **dadurch gekennzeichnet, dass** die erste Stromkreiselektrode (8a) von der Stromquelle (9) auf ein Einspeisepotenzial (Uin) gelegt wird und die zweite Stromkreiselektrode (8b) auf ein Referenzpotenzial gelegt wird, insbesondere wobei das Referenzpotenzial das elektrische Bezugspotenzial ist, auf das bezogen auch die Messelektrodenspannungen (Ue1, Ue2) gemessen werden.

4. Verfahren (1) nach einem der Ansprüche 1 bis 3, **dadurch gekennzeichnet, dass** die Stromquelle (9) einen Wechselstrom (Im~) mit konstanter Amplitude oder einen Gleichstrom mit konstanter Höhe als Messstrom (Im) erzeugt.

5. Verfahren (1) nach einem der Ansprüche 1 bis 4, **dadurch gekennzeichnet, dass** im Füllstandmessbetrieb zum Test (test1) einer trockenliegenden Stromkreiselektrode (8a, 8b) der von der Stromquelle (9) abgegebene Messstrom (Im) messtechnisch erfasst wird und bei einer Unterschreitung des gemessenen Messstroms (Im_mess) von dem der Stromquelle (9) vorgegebenen Soll-Messstrom (Im_soll) wenigstens eine trockenliegende Stromkreiselektrode (8a, 8b) erkannt wird, insbesondere wenn die Abweichung größer ist als eine zulässige maximale Abweichung, insbesondere wobei der gemessene Messstrom (Im_mess) kleiner als ein vorgegebener minimaler Messstrom ist, ganz insbesondere wobei der gemessene Messstrom (Im_mess) null ist.

6. Verfahren (1) nach einem der Ansprüche 1 bis 5, **dadurch gekennzeichnet, dass** im Füllstandmessbetrieb zum Test (test2) einer trockenliegenden Stromkreiselektrode (8a, 8b) die Spannungsdifferenz (Usrc_diff) zwischen der messtechnisch erfassten Einspeisespannung (Uin_mess) an der ersten Stromkreiselektrode (8a) und einer von der Stromquelle (9) eingestellten Stromquellen-Ausgangsspannung (Usrc_out) ermittelt wird, und eine trockenliegende Stromkreiselektrode (8a, 8b) festgestellt wird, wenn der Betrag der ermittelten Spannungsdifferenz kleiner ist als eine vorgegebene minimale Spannungsdifferenz (Usrc_diff_min).

7. Verfahren (1) nach einem der Ansprüche 1 bis 6, **dadurch gekennzeichnet, dass** im Füllstandmessbetrieb zum Test (test3) einer trockenliegenden Messelektrode (6a, 6b) das Spannungsverhältnis (Ue1/Uin_mess, Ue2/Uin_mess) der erfassten Messelektrodenspannung (Ue1, Ue2) der jeweiligen Messelektrode (6a, 6b) zu der messtechnisch erfassten Einspeisespannung (Uin_mess) an der ersten Stromkreiselektrode (8a) ermittelt wird und eine trockenliegende Messelektrode (6a, 6b) erkannt wird, wenn das ermittelte Spannungsverhältnis der betreffenden Messelektrode (6a, 6b) einen vorgegebenen Spannungsverhältniswert (Urel) unterschreitet, insbesondere wobei erst dann auf eine trockenliegende Messelektrode (6a, 6b) geschlossen wird, wenn zusätzlich wenigstens einer der Tests auf eine trockenliegende Stromkreiselektrode (8a, 8b) negativ ausgefallen ist.

8. Verfahren (1) nach einem der Ansprüche 1 bis 7, **dadurch gekennzeichnet, dass** der Stromquelle (9) ein Soll-Messstrom (Im_soll) mit einem charakteristischen Zeitverlauf vorgegeben wird, insbesondere in Form einer Rechteckfolge oder einer Sägezahnkurve, wobei bei Auswertung einer der messtechnisch erfassten Größen, also einer der erfassten Messelektrodenspannungen (Ue1, Ue2), des von der Stromquelle (9) abgegebenen Messstroms (Im), der von der Stromquelle (9) verursachten Einspeisespannung (Uin) an der ersten Stromkreiselektrode (8a), überprüft wird, ob die messtechnisch erfasste Größe einen entsprechenden charakteristischen Zeitverlauf aufweist, und wenn die messtechnisch erfasste Größe einen entsprechenden charakteristischen Zeitverlauf aufweist, die messtechnisch erfasste Größe als sicher vorhanden eingestuft wird, andernfalls als nicht sicher vorhanden eingestuft wird.

9. Verfahren (1) nach einem der Ansprüche 1 bis 8, **dadurch gekennzeichnet, dass** während des Füllstandmessbetriebs der Durchflussmessbetrieb ausgesetzt wird, insbesondere die Magnetfelderzeugungseinrichtung (5) nicht bestromt wird, sodass kein Magnetfeld (B) erzeugt wird.

10. Verfahren (1) nach einem der Ansprüche 1 bis 9, **dadurch gekennzeichnet, dass** in dem magnetisch-induktiven Durchflussmessgerät (2) eine Information zumindest über die höchstliegende Elektrode (6a, 6b, 8a, 8b) der Messelektroden (6a, 6b) und Stromkreiselektroden (8a, 8b) hinterlegt ist und bevorzugt diese Elektrode (6a, 6b, 8a, 8b) durch einen entsprechenden Test auf eine trockenliegende Messelektrode (6a, 6b) oder einen entsprechenden Test auf eine trockenliegende Stromkreiselektrode (8a, 8b) überprüft wird.

11. Verfahren (1) nach einem der Ansprüche 1 bis 10, **dadurch gekennzeichnet, dass** in dem magnetisch-induktiven Durchflussmessgerät (2) eine Information zumindest über die höchstliegende Elektrode (6a, 6b, 8a, 8b) der Messelektroden (6a, 6b) und Stromkreiselektroden (8a, 8b) hinterlegt ist und mit der Information über die höchstliegende Elektrode das Ergebnis eines durchgeführten Tests auf eine trockenliegende Messelektrode (6a, 6b) und/oder eine trockenliegende Stromkreiselektrode (8a, 8b) einem Plausibilitätstest unterzogen wird, insbesondere überprüft wird, ob die höchstliegende Elektrode (6a, 6b, 8a, 8b) als erste Elektrode als trockenliegende Elektrode erkannt worden ist oder insbesondere überprüft wird, ob bei mehreren als trockenliegend erkannten Elektroden (6a, 6b, 8a, b) jedenfalls auch die höchstliegende Elektrode als trockenliegend erkannt worden ist.

12. Verfahren (1) nach Anspruch 10 oder 11, **dadurch gekennzeichnet, dass** in dem magnetisch-induktiven Durchflussmessgerät (2) Informationen über die Einbauhöhe mehrerer der Messelektroden (6a, 6b) und Stromkreiselektroden (8a, 8b) hinterlegt sind und bei Erkennung mehrerer trockenliegender Elektroden (6a, 6b, 8a, 8b) überprüft wird, ob es sich dabei um die mehreren höchstliegenden Elektroden (6a, 6b, 8a, 8b) handelt.

13. Verfahren (1) nach einem der Ansprüche 10 bis 12, **dadurch gekennzeichnet, dass** das magnetisch-induktive Durchflussmessgerät (1) die höchstliegende Elektrode (6a, 6b, 8a, 8b) oder die mehreren höchstliegenden Elektroden (6a, 6b, 8a, 8b) selbstständig ermittelt auf Grundlage der Einbaupositionen der Messelektroden (6a, 6b) und der Stromkreiselektroden (8a, 8b) im magnetisch-induktiven Durchflussmessgerät (2) bei einer Standardmontage (13) und auf Grundlage von wenigstens einer Abweichinformation (15) über eine von der Standardmontage (13) abweichende Istmontage (14), in der das magnetisch-induktive Durchflussmessgerät (2) tatsächlich verbaut ist, insbesondere wobei die Abweichinformation (15) wenigstens einen Schwenkwinkel (alpha _x, alpha_y, alpha_z) bezüglich einer Drehachse (x, y, z) umfasst, bevorzugt wenigstens einen Schwenkwinkel (alpha_x) in Bezug auf eine Drehachse (x) in Achsrichtung des Messrohrs (3), besonders bevorzugt wobei der Schwenkwinkel eingegeben wird oder durch einen Beschleunigungssensor des magnetisch-induktiven Durchflussmessgeräts (2) ermittelt wird.

14. Magnetisch-induktives Durchflussmessgerät (2), mit wenigstens einem Messrohr (3) mit einem Einströmbereich (3a), einem Ausströmbereich (3b) und mit einem zwischen dem Einströmbereich (3a) und dem Ausströmbereich (3b) liegenden Messbereich (3c) zum Führen eines strömenden Mediums (4) durch das Durchflussmessgerät (2), mit wenigstens einer Magnetfelderzeugungseinrichtung (5) zum Erzeugen eines das Messrohr (3) im Messbereich (3c) senkrecht zur Strömungsrichtung des Mediums (4) durchsetzenden Magnetfeldes (B), mit wenigstens einem Messelektrodenpaar (6a, 6b) im Messbereich (3c) des Messrohrs (3) zum Abgreifen einer in dem Medium (4) im Messrohr (3) induzierten elektrischen Spannung (Uind), und mit wenigstens einer Steuer- und Auswerteeinheit (7), die ein einem Durchflussmessbetrieb aus der gemessenen induzierten elektrischen Spannung (Uind) einen Durchflussmesswert (F) ermittelt,
**dadurch gekennzeichnet,**
**dass** im Bereich des Messrohrs (3) mit Kontakt zum Medium (4) zumindest bei vollständig mediumgefüllten Messrohr (3) eine erste Stromkreiselektrode (8a) und eine zweite Stromkreiselektrode (8b) angeordnet sind, dass die Stromkreiselektroden (8a, 8b) außerhalb des Messrohres (3) mit einer Stromquelle (9) verbunden sind und in einem Füllstandmessbetrieb der Stromquelle (9) ein Soll-Messstrom (Im_soll) vorgegeben wird, mit dem die Stromkreiselektroden (8a, 8b) beaufschlagt werden, wobei die Stromkreiselektroden (8a, 8b) so angeordnet sind, dass sich ein Füllstandstromkreis (10) zumindest bei vollständig mediumgefülltem Messrohr (3) im Medium (4) über einen Mediumstrompfad (11) schließt, wobei der Mediumstrompfad (11) den Strömungsquerschnitt des Messrohrs (3), in dem die Messelektroden (6a, 6b) liegen, passiert, sodass sich ein elektrischer Spannungsabfall zwischen den Stromkreiselektroden (8a, 8b) im Medium ergibt, und
**dass** die Steuer- und Auswerteeinheit (7) so ausgestaltet ist, dass sie in dem Füllstandsmessbetrieb das Verfahren (1) gemäß einem der Ansprüche 1 bis 13 ausführt.

15. Magnetisch-induktives Durchflussmessgerät (2) nach Anspruch 11, **dadurch gekennzeichnet, dass** wenigstens eine der Stromkreiselektroden (8a, 8b) als endseitiger leitfähiger Flansch des Messrohrs (3) ausgebildet ist.

16. Magnetisch-induktives Durchflussmessgerät (2) nach Anspruch 15, **dadurch gekennzeichnet, dass** eine der Stromkreiselektroden (8a, 8b) sowohl als leitfähiger Flansch im Einströmbereich (3a) wie auch als leitfähiger Flansch im Ausströmbereich (3b) des Messrohrs (3) ausgebildet ist.

17. Magnetisch-induktives Durchflussmessgerät (2) nach einem der Ansprüche 14 bis 16, **dadurch gekennzeichnet, dass** eine der Stromkreiselektroden (8a, 8b) an einem oberen Scheitelpunkt eines Messrohrquerschnitts quer zur Messrohrachse angeordnet ist, insbesondere am höchsten Scheitelpunkt des Messrohrquerschnitts angeordnet ist, wobei vorzugsweise der obere Scheitelpunkt bei Standardmontage des magnetisch-induktiven Durchflussmessgeräts (2) vorliegt.

18. Magnetisch-induktives Durchflussmessgerät (2) nach einem der Ansprüche 14 bis 17, **dadurch gekennzeichnet, dass** wenigstens eine der Stromkreiselektroden (8a) im Bereich des Messrohrs (3) axial versetzt zu einer Messelektrodenebene (12), in der die Messelektroden (6a, 6b) angeordnet sind und die senkrecht zur axialen Erstreckung des Messrohrs (4) verläuft, angeordnet ist, insbesondere zwischen dem Einströmbereich (3a) und dem Ausströmbereich (3b), insbesondere wobei beide der Stromkreiselektroden (8a, 8b) im Bereich des Messrohrs (3) axial versetzt zu der Messelektrodenebene (12) und zwischen dem Einströmbereich (3a) und dem Ausströmbereich (3b) angeordnet sind.

19. Magnetisch-induktives Durchflussmessgerät (2) nach einem der Ansprüche 14 bis 18, **dadurch gekennzeichnet, dass** eine der Stromkreiselektroden (8a) in der Messelektrodenebene (12) angeordnet ist, insbesondere beide Stromkreiselektroden (8a, 8b) in der Messelektrodenebene (12) angeordnet sind.
